(19) **Europäisches Patentamt / European Patent Office / Office européen des brevets**

(11) **EP 2 928 842 B1**

(12) ## FASCICULE DE BREVET EUROPEEN

(45) Date de publication et mention de la délivrance du brevet:
**06.12.2017 Bulletin 2017/49**

(21) Numéro de dépôt: **13824185.6**

(22) Date de dépôt: **06.12.2013**

(51) Int Cl.:
*C04B 35/26* (2006.01)    *B28B 1/00* (2006.01)
*C04B 35/472* (2006.01)    *C04B 35/495* (2006.01)
*C04B 35/497* (2006.01)    *C04B 35/499* (2006.01)
*C04B 35/52* (2006.01)    *C04B 35/583* (2006.01)
*C04B 35/626* (2006.01)    *C04B 38/00* (2006.01)
*C04B 38/06* (2006.01)    *C04B 35/634* (2006.01)
*C04B 35/10* (2006.01)    *C04B 38/04* (2006.01)
*C04B 111/00* (2006.01)

(86) Numéro de dépôt international:
**PCT/IB2013/060700**

(87) Numéro de publication internationale:
**WO 2014/087382 (12.06.2014 Gazette 2014/24)**

(54) **PRODUIT À FONCTION ORIENTÉE ET SON PROCÉDÉ D'OBTENTION**

**PRODUKT MIT EINER AUSGERICHTETEN FUNKTION UND VERFAHREN ZUR HERSTELLUNG DAVON**

**PRODUCT COMPRISING AN ORIENTED FUNCTION AND PROCESS FOR OBTAINING SAME**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2012 FR 1261777**

(43) Date de publication de la demande:
**14.10.2015 Bulletin 2015/42**

(60) Demande divisionnaire:
**17171794.5**

(73) Titulaire: **Saint-Gobain Centre De Recherches Et D'etudes Europeen**
**92400 Courbevoie (FR)**

(72) Inventeurs:
- **DEVILLE, Sylvain**
  **F-84800 L'isle Sur La Sorgue (FR)**
- **BOUVILLE, Florian**
  **F-84300 Cavaillon (FR)**

(74) Mandataire: **Nony**
**11 rue Saint-Georges**
**75009 Paris (FR)**

(56) Documents cités:
**EP-A1- 2 368 633**    **EP-A2- 1 253 121**
**WO-A2-2013/106118**    **FR-A1- 2 958 288**
**US-A1- 2007 249 493**    **US-A1- 2010 200 801**

- **PHILIPP M. HUNGER ET AL: "Platelets self-assemble into porous nacre during freeze casting", JOURNAL OF THE MECHANICAL BEHAVIOR OF BIOMEDICAL MATERIALS, vol. 19, 3 novembre 2012 (2012-11-03), pages 87-93, XP055063805, ISSN: 1751-6161, DOI: 10.1016/j.jmbbm.2012.10.013 cité dans la demande**
- **NISHIHARA H ET AL: "Ordered macroporous silica by ice templating", CHEMISTRY OF MATERIALS, AMERICAN CHEMICAL SOCIETY, WASHINGTON, US, vol. 17, no. 3, 8 février 2005 (2005-02-08), pages 683-689, XP002604921, ISSN: 0897-4756, DOI: 10.1021/CM048725F [extrait le 2005-01-14]**

- **SEUNG-HO LEE ET AL: "Fabrication of Porous PZT-PZN Piezoelectric Ceramics With High Hydrostatic Figure of Merits Using Camphene-Based Freeze Casting", JOURNAL OF THE AMERICAN CERAMIC SOCIETY, vol. 90, no. 9, 25 juin 2007 (2007-06-25), pages 2807-2813, XP055064317, ISSN: 0002-7820, DOI: 10.1111/j.1551-2916.2007.01834.x cité dans la demande**

- **ETIENNE MUNCH ET AL: "Architectural Control of Freeze-Cast Ceramics Through Additives and Templating", JOURNAL OF THE AMERICAN CERAMIC SOCIETY, vol. 92, no. 7, 1 juin 2009 (2009-06-01), pages 1534-1539, XP055104887, ISSN: 0002-7820, DOI: 10.1111/j.1551-2916.2009.03087.x cité dans la demande**

## Description

### Domaine technique

L'invention se rapporte à un procédé de fabrication d'un produit, éventuellement fritté, obtenu par congélation orientée d'une barbotine, puis élimination des cristaux obtenus par ladite congélation. L'invention concerne également un produit à pores tubulaires tronconiques.

### Etat de la technique

Un produit, éventuellement fritté, obtenu par congélation orientée d'une barbotine, puis élimination des cristaux obtenus par ladite congélation est classiquement utilisé dans de nombreuses applications, et en particulier dans une pile à combustible, comme support de catalyseur, ou dans un échangeur thermique.

US 2007/0249493 décrit un produit obtenu par congélation orientée d'un gel de silice. Un sol de silice est d'abord préparé qui est constitué d'une solution de silicate de sodium présentant une concentration de molécules de $SiO_2$ de 1,9 mol/l. Des nanofibres de carbone sont dispersées dans ce sol de silice qui est ensuite gélifié de façon à obtenir ledit gel de silice, sensiblement solide.

L'article «Platelets self-assemble into porous nacre during freeze casting », Ph. HUNGER et al., Journal of the Mechanical Behaviour of Biomedical Materials, vol. 19, pages 87-93, 2012 décrit un procédé de congélation orientée d'une nacre synthétique à partir d'une barbotine comportant des particules d'alumine, de forme plaquettaire ou sphérique. Cet article décrit en outre les propriétés mécaniques (module d'élasticité, ténacité, résistance à la rupture) du produit obtenu.

L'article « Fabrication of porous PZT-PZN piezoelectric ceramics with high hydrostatic figure of merits using camphene based freeze casting », S-H. LEE et al., Journal of the American Ceramic Society, vol. 90, no. 9, 2007, décrit un produit poreux obtenu par congélation orientée d'une barbotine comportant des particules en suspension de forme quelconque, obtenues par broyage d'agglomérats sphériques.

FR 2 958 288 A1 décrit un produit constitué en un matériau céramique, au moins une partie dudit produit présentant une teneur massique en zircone supérieure à 1,5% et inférieure à 40% et/ou n'étant pas constitué de silice amorphe et comportant des pores et respectant les critères suivants : au moins 70% en nombre desdits pores sont des pores tubulaires tronconiques s'étendant sensiblement parallèlement les uns aux autres suivant une direction longitudinale ; dans au moins un plan de coupe transversal, la taille moyenne des sections transversales desdits pores, est supérieure à 0,15 $\mu$m et inférieure à 300 $\mu$m ; dans au moins un plan de coupe transversal, au moins 50% en nombre des pores présentent un indice de convexité Ic supérieur à 87%, l'indice de convexité d'un pore étant égal au rapport Sp/Sc des surfaces Sp et Sc délimitées par le périmètre et par l'enveloppe convexe dudit pore, respectivement.

US 2010/200801 A1 décrit un matériau d'interface thermique formé à partir d'une matrice de base comportant un polymère et entre 5 et 90 % en masse d'une charge de nitrure de bore ayant une structure plaquettaire, dans lequel les structures plaquettaires des particules de nitrure de bore sont sensiblement alignées pour que le matériau d'interface thermique présente une conductivité thermique en volume d'au moins 1 W/mK.

La demande internationale WO 2013/106118 A1, publiée à une date postérieure à la date de priorité de la présente demande, décrit des céramiques PMN-PZT et PMN-PT texturées qui sont créées à l'aide d'une croissance granulaire sur la base d'un modèle pour aligner des cristaux de germe dans une poudre de matrice céramique par un processus de coulage en bande. Un traitement thermique entraîne ensuite la nucléation et la croissance des cristaux de matrice sur des modèles alignés. Les céramiques PMN-PZT et PMN-PT texturées résultantes présentent chacune un coefficient piézoélectrique longitudinal élevé et un coefficient de tension piézoélectrique élevé.

Il existe un besoin permanent pour un produit adapté à ces applications et présentant des propriétés dont l'intensité est variable selon la direction considérée.

Un objet de l'invention est de satisfaire, au moins partiellement, ce besoin.

### Résumé de l'invention

L'invention concerne un procédé selon la revendication 1.

Comme on le verra plus en détail dans la suite de la description, les inventeurs ont découvert qu'un procédé selon l'invention permet de fabriquer une préforme macroporeuse dont les parois des macropores comportent, sur au moins une partie de leur épaisseur, un empilement, globalement orienté, de particules céramiques orientables. De manière remarquable, la présence des particules orientables en un matériau à fonction orientée permet de bénéficier de l'orientation résultant de la congélation orientée pour obtenir un produit présentant des propriétés dont l'intensité est très variable selon la direction considérée.

Plus particulièrement, l'emploi de particules céramiques orientables en un matériau à fonction orientée permet d'obtenir un produit présentant, pour une propriété donnée, une intensité amplifiée selon au moins une direction, comparativement à l'emploi de particules céramiques orientables en un matériau ne présentant pas une telle fonction orientée. En particulier, une telle comparaison peut être effectuée en considérant un matériau à fonction orientée dont ladite propriété présente une intensité moyenne (selon trois directions de l'espace formant un repère orthogonal), sensiblement égale à l'intensité de la propriété d'un matériau ne présentant pas une propriété orientée.

Sans être liés par cette théorie, les inventeurs expliquent la structure particulière d'un produit selon l'invention du fait que, la vitesse Vp de déplacement du front de solidification étant inférieure à la vitesse d'encapsulation des particules céramiques, le front de solidification repousse les particules orientables. Lors de leur déplacement, ces particules céramiques orientables s'orientent et peuvent ainsi s'empiler sensiblement suivant la direction de déplacement du front de solidification.

Dans un mode de réalisation préféré, la forme des particules orientables est choisie en fonction de l'orientation de la fonction, de manière que la congélation orientée permette d'obtenir des propriétés dont l'intensité est variable selon une direction choisie.

Plus particulièrement, un arrangement particulier de telles particules orientables, par exemple sous la forme d'un empilement, permet d'augmenter la réponse d'une propriété lorsque cet arrangement est corrélé à l'orientation de la fonction dans lesdites particules. La réponse peut ainsi être augmentée, selon un plan ou une direction privilégiés, en fonction du nombre de particules présentant sensiblement la même orientation.

La fonction orientée peut notamment correspondre à des propriétés thermiques, électriques, piézoélectriques ou magnétiques. Le nitrure de bore hexagonal, le graphite, le graphène, sont par exemple, des matériaux céramiques dont la conductivité thermique est orientée. Le graphite hexagonal, le graphène, sont des exemples de matériaux céramiques dont la conductivité électrique est orientée. Le PMN PT, ou $(1-x)[Pb(Mg_{1/3}Nb_{2/3})O_3]-x[PbTiO_3]$, avec x compris entre 0 et 1, $PbTiO_3$, $(Li,Na,K)(Nb,Ta,Sb)O_3$, en particulier le niobiate de sodium et de potassium, sont des exemples de matériaux piézoélectriques. L'hématite est un exemple de matériau céramique dont les propriétés ferromagnétiques sont orientées.

Dans un mode de réalisation, l'ensemble des particules céramiques comporte :

- une première fraction particulaire constituée de particules orientables, de préférence anisotropes, en un matériau à fonction orientée, présentant une longueur médiane $L'_{50}$ et représentant plus de 1% des particules céramiques, en pourcentage volumique sur la base de l'ensemble des particules céramiques ; et
- une deuxième fraction particulaire présentant une longueur médiane $D_{50}$ au moins dix fois inférieure à $L'_{50}$ (c'est-à-dire $D_{50} < L'_{50}/10$) et représentant plus de 5% des particules céramiques, en pourcentage volumique sur la base de l'ensemble des particules céramiques ;

les première et deuxième fractions particulaires représentant ensemble, plus de 80% de l'ensemble des particules céramiques, en pourcentage volumique.

Lors du déplacement et l'orientation des particules orientables, les particules de la deuxième fraction particulaire sont progressivement emprisonnées dans les espaces entres les particules orientables. Il en résulte une densité apparente particulièrement élevée, et donc des propriétés mécaniques supérieures, en particulier après frittage.

Par ailleurs, en particulier lorsque la quantité de particules céramiques anisotropes est suffisamment élevée, les inventeurs ont constaté que les particules de la deuxième fraction particulaire peuvent, lors du frittage, coalescer avec les particules anisotropes voisines pour former des particules anisotropes de plus grandes dimensions. Il en résulte un empilement de particules anisotropes surprenant, correspondant à une densité apparente remarquable. L'étape g) de frittage est donc préférée.

Un procédé selon l'invention peut encore comporter une ou plusieurs des caractéristiques optionnelles suivantes, qui peuvent être combinées suivant toutes les combinaisons possibles :

- Le matériau à fonction orientée est choisi dans le groupe formé par le nitrure de bore hexagonal, le graphite, le graphène, le PMN PT, ou $(1-x)[Pb(Mg_{1/3}Nb_{2/3})O_3]-x[PbTiO_3]$, avec x compris entre 0 et 1, $PbTiO_3$, $(Li,Na,K)(Nb,Ta,Sb)O_3$, en particulier le niobiate de sodium et de potassium, et l'hématite.
- On détermine une direction, puis on choisit la forme des particules orientables en fonction de l'orientation de la fonction, de manière que la congélation orientée permette d'obtenir des propriétés dont l'intensité est variable selon ladite direction.
- L'ensemble de particules céramiques comporte, en pourcentage volumique sur la base de l'ensemble des particules céramiques,

    - une première fraction particulaire constituée de particules orientables, de préférence anisotropes, en un matériau à fonction orientée, présentant une longueur médiane $L'_{50}$ et représentant plus de 1% des particules céramiques, en pourcentage volumique sur la base de l'ensemble des particules céramiques ; et

- une deuxième fraction particulaire présentant une longueur médiane $D_{50}$ au moins dix fois inférieure à $L'_{50}$ et représentant plus de 5% des particules céramiques, en pourcentage volumique sur la base de l'ensemble des particules céramiques ;

les première et deuxième fractions particulaires représentant ensemble, plus de 80% de l'ensemble des particules céramiques, en pourcentage volumique.

- la première fraction particulaire représente plus de 5% et moins de 15% du volume des particules céramiques, et les particules de la première fraction particulaire sont en un matériau à fonction orientée, et les première et deuxième fractions particulaires représentent ensemble plus de 95% du volume de l'ensemble des particules céramiques, et la distribution granulométrique des particules céramiques est bimodale, les deux modes principaux correspondant aux première et deuxième fractions particulaires, respectivement, le procédé comportant une étape de frittage g).

- la première fraction particulaire représente plus de 90% du volume des particules céramiques, et les particules de la première fraction particulaire sont en un matériau à fonction orientée, et les première et deuxième fractions particulaires représentent ensemble plus de 95% du volume de l'ensemble des particules céramiques, et la distribution granulométrique des particules céramiques est bimodale, les deux modes principaux correspondant aux première et deuxième fractions particulaires, respectivement, le procédé comportant de préférence une étape de frittage g).

- La fonction orientée correspond à une propriété thermique, électrique, piézoélectrique ou magnétique.

- Les particules céramiques orientables sont des plaquettes de nitrure de bore, chaque plaquette présentant une conductivité thermique dans le plan principal de la plaquette supérieure à la conductivité thermique selon l'épaisseur de la plaquette.

- Les particules céramiques orientables sont des particules anisotropes ou des particules multi-facettées présentant plus de deux facettes.

- Plus de 50%, des particules orientables appartiennent à une même classe de forme, en pourcentage en volume.

- L'ensemble de particules céramiques comporte en pourcentage volumique sur la base de l'ensemble des particules céramiques, plus de 80% de particules céramiques orientables.

- Le matériau constituant les particules céramiques orientables, voire anisotropes, et/ou les particules céramiques de la deuxième fraction particulaire et/ou les particules de la fraction complémentaire aux particules orientables ou aux particules anisotropes est choisi parmi les oxydes, les nitrures, les carbures, les carbo-oxy-nitrures et leurs mélanges.

- Ledit matériau est choisi dans le groupe formé par l'oxyde de zirconium ou zircone ($ZrO_2$) l'oxyde de zirconium partiellement stabilisé, l'oxyde de zirconium stabilisé, l'oxyde d'yttrium ($Y_2O_3$), l'oxyde d'yttrium dopé, de préférence l'oxyde d'yttrium dopé à l'oxyde de samarium, l'oxyde de titane ($TiO_2$), les aluminosilicates comme la mullite, la cordiérite ($Al_3Mg_2AlSi_5O_{18}$), l'oxyde d'aluminium ou alumine ($Al_2O_3$), les alumines hydratées, et en particulier la boehmite, l'oxyde de magnésium (MgO), le talc ($Mg_3Si_4O_{10}(OH)_2$), l'oxyde de nickel (NiO), les oxydes de fer (FeO, $Fe_2O_3$, $Fe_3O_4$ l'oxyde de cérium, l'oxyde de cérium dopé, les oxydes de structure pérovskite, en particulier les gallates, les composés comportant du lanthane du type $LaAlO_3$ ou $LaGaO_3$ ou $La_{(1-x)}Sr_xMO_3$, avec $0 \leq x \leq 1$ et M un élément choisi dans le groupe formé du chrome, du cobalt, du magnésium, du fer, du gadolinium, du manganèse et de leurs mélanges ; les oxydes de structure pérovskite dopés avec du platine et/ou du palladium et/ou du rhodium et/ou de l'or et/ou de l'argent, par exemple $La_{(1-x)}Sr_xM_{(1-y)}M'_yO_3$ avec $0 \leq x \leq 1$, $0 \leq y \leq 0,15$, M étant un élément choisi dans le groupe formé du chrome, du cobalt, du magnésium, du fer, du gadolinium, du manganèse et de leurs mélanges, M' étant un élément choisi dans le groupe formé du platine, du palladium, du rhodium, de l'or, de l'argent et leurs mélanges, les composés comportant du titane du type $La_4Sr_8Ti_{11}Mn_{1-x}Ga_xO_{38}$ avec $0 \leq x \leq 1$ et $La_4Sr_8Ti_{12-n}Mn_nO_{38}$ avec $0 \leq n \leq 1$, les composés du type $BaTiO_3$, $BaZrO_3$, $Pb(Mg_{0,25}Nb_{0,75})O_3$, $Ba(Zn_{0,25}Nb_{0,75})O_3$, $Pb(Zn_{0,25}Nb_{0,75})O_3$, $PbTiO_3$, $CaCu_3Ti_4O_{12}$, les composés de structure du type bimevox, par exemple $Bi_2V_{1-x}Me_xO_z$ avec $0 \leq x \leq 1$, z permettant d'assurer l'électroneutralité, et Me un élément choisi dans le groupe formé du magnésium, de l'aluminium, du silicium, du titane, du cobalt, du nickel, du cuivre, du zinc, du manganèse, de l'antimoine, du tantale, du niobium, du chrome, du molybdène, du tungstène, de l'uranium et de leurs mélanges, les composés de structure du type lamox, par exemple $La_2Mo_2O_9$, les composés de structure apatite, par exemple $Me'_{10}(XO_4)_6Y'_2$ dans lequel Me' est un cation métallique choisi dans le groupe formé de $Ca^{2+}$, de $Cd^{2+}$, de $Sr^{2+}$, de $Ba^{2+}$, de $Pb^{2+}$, de $Na^+$, de $K^+$, des cations de terres rares, de préférence $La^{3+}$ et $Nd^{3+}$, de $Al^{3+}$, de $U^{4+}$, de $Th^{4+}$, $(XO_4)$ est un groupement anionique choisi parmi $PO_4^{3-}$, $SiO_4^{4-}$, $AsO_4^{3-}$, $MnO_4^-$, $SO_4^{2-}$, $CO_3^{2-}$, $HPO_4^{2-}$, $SiO_4^{4-}$, $GeO_4^{4-}$ et leurs mélanges, et Y' est un anion choisi parmi $F^-$, $Cl^-$, $OH^-$, $Br^-$, $I^-$, $CO_3^{2-}$, $O^{2-}$ et leurs mélanges, les composés de type $SrCe_{1-x}M_xO_3$ avec $0 \leq x \leq 1$ et M une terre rare, M étant de préférence l'ytterbium, les composés du type $BaCe_{1-x}M_xO_3$, avec $0 \leq x \leq 1$ et M une terre rare, par exemple le composé $BaCeO_3$, les composés de la famille $La_xSr_{1-x}ScO_3$ avec $0 \leq x \leq 1$, par exemple $La_{0,9}Sr_{0,1}ScO_3$, les zéolithes de structure $Na_{x1}Ca_{x2}Mg_{x3}Ba_{x4}K_{x5}Al_{x6}(Si_{x7}O_{x8})$, $x9H_2O$, $x1$ à $x9$ étant des entiers positifs ou nuls respectant les conditions suivantes : $x6 > 0$, $x7 > 0$, $x8 > 0$, $x9 > 0$ et $x1 + x2 + x3 + x4 + x5 > 0$, $KNbO_3$ éventuellement dopé de préférence avec du lithium et/ou du tantale et/ou du baryum,

**EP 2 928 842 B1**

$NaNbO_3$ éventuellement dopé de préférence avec du lithium et/ou du tantale et/ou du baryum, $(K_{0,5}Na_{0,5})NbO_3$ éventuellement dopé de préférence avec du lithium et/ou du tantale et/ou du baryum, le nitrure d'aluminium, le nitrure de bore, le nitrure de silicium, le nitrure de titane, le carbure de titane, le carbure de silicium, le carbure de tungstène, le carbure de zirconium, et leurs mélanges.

Il est décrit également une préforme obtenue ou susceptible d'avoir été obtenue à l'issue d'un procédé comportant des étapes a) à e) ci-dessus.

Il est aussi décrit un produit obtenu ou susceptible d'avoir été obtenu par un procédé selon l'invention.

La présente invention concerne également un **produit,** éventuellement fritté, comportant une pluralité de pores tubulaires tronconiques macroscopiques s'étendant sensiblement parallèlement les uns aux autres suivant une direction longitudinale, chaque pore tubulaire tronconique étant délimité par une paroi comportant plus de 50% en nombre de grains céramiques orientables,

les parois entre lesdits pores tubulaires tronconiques comportant plus de 5%, en pourcentage volumique, de grains céramiques orientables en un matériau à fonction orientée, les grains céramiques orientables présentant une ou plusieurs orientations préférentielles.

Comme cela apparaîtra dans la suite de la description, un procédé selon l'invention conduit à une orientation des particules céramiques orientables lors de la fabrication du produit, c'est-à-dire que les grains orientables du produit, correspondant aux particules orientables de la barbotine, sont orientés.

De préférence, un produit selon l'invention comporte encore une, et de préférence plusieurs, des caractéristiques optionnelles suivantes :

- Le produit comporte une pluralité de pores tubulaires tronconiques macroscopiques s'étendant sensiblement parallèlement les uns aux autres suivant une direction longitudinale, chaque pore tubulaire tronconique étant délimité par une paroi, les parois entre lesdits pores tubulaires tronconiques comportant plus de 5%, en pourcentage volumique, de grains céramiques orientables et présentant une fonction orientée.
- Ladite fonction est orientée suivant la direction des pores tubulaires tronconiques.
- La paroi comporte une strate périphérique constituée par une ou plusieurs couches de grains céramiques orientables.
- La dispersion de l'orientation des joints de grains est inférieure à 30°, de préférence inférieure à 15°.

L'invention concerne encore un dispositif choisi parmi une cellule électrochimique céramique, une pile à combustible, et en particulier une pile SOFC, une pile IT-SOFC, une pile PCFC, un élément de filtration d'un fluide liquide ou gazeux, une microstructure de stockage utilisée pour stocker, dans les macropores, une substance, un support de catalyseur, un échangeur thermique, un isolant thermique, un distributeur de fluide permettant de véhiculer ledit fluide, et notamment un distributeur de gaz, un séparateur de gouttes ou un bloc de ruissèlement pour une centrale de traitement de l'air, une batterie, et notamment un électrolyte d'une batterie, un supercondensateur, un adsorbeur d'humidité, une micro-chambre de combustion, un transducteur, un capteur de déplacement, une sonde échographique, un support de cuisson, un moufle de frittage, en particulier un moufle utilisé pour le frittage du nitrure d'aluminium (AlN), ledit dispositif comportant un produit selon l'invention. Ce produit peut être en particulier utilisé en tant qu'électrolyte imprégné dans les piles susmentionnées.

Dans un développement supplémentaire, l'invention concerne un produit dense, éventuellement fritté, présentant une masse volumique relative supérieure à 85%, comportant en pourcentage volumique plus de 50% de grains céramiques orientables, et comportant plus de 5%, en pourcentage volumique, de grains céramiques orientables, de préférence des bâtonnets ou des plaquettes, et présentant une fonction orientée, plus de 80% des grains céramiques orientables étant sensiblement parallèles les uns aux autres, le produit étant obtenu ou susceptible d'avoir été obtenu par un procédé selon l'invention, dans lequel l'ensemble des particules céramiques comporte plus de 10%, en volume des particules céramiques, de particules céramiques orientables en un matériau à fonction orientée, les particules céramiques orientables étant des particules anisotropes, une particule anisotrope présentant un facteur d'allongement R entre sa longueur L et son épaisseur W1, soit R = L/W1, supérieur à 4, le procédé comportant en outre une étape e') de compression, de préférence successive à l'étape e), consistant à comprimer ledit bloc selon une direction sensiblement parallèle à la direction de l'épaisseur des cristaux de phase liquide solidifiée, de manière à obtenir un produit dense selon l'invention.

De préférence, l'épaisseur du produit dense est supérieure à 50 $\mu$m, de préférence supérieure à 100 $\mu$m, de préférence supérieure à 500 $\mu$m, voire supérieure à 1 mm, voire supérieure à 5 mm, voire supérieure à 1 cm, voire supérieure à 5 cm.

Avantageusement, un produit dense selon l'invention présente une réponse optimale de la fonction orientée par unité de volume de produit, ainsi que de bonnes propriétés mécaniques, notamment la contrainte à rupture et la ténacité, en particulier comparativement au produit poreux obtenu en fin d'étape e), f) ou g) d'un procédé ne comportant pas d'étape e').

6

**Définitions**

- On appelle « matériau céramique » tout matériau non métallique et non organique.
- Par « vitesse d'encapsulation des particules céramiques », Vc, on entend la vitesse du front de solidification au-delà de laquelle, lors du passage dudit front de solidification, les particules céramiques ne sont plus repoussées par le front de solidification entre les cristaux de phase liquide solidifiée, mais restent emprisonnées dans ces cristaux de phase liquide solidifiée.

  La vitesse d'encapsulation des particules céramiques d'une barbotine dépend notamment de la quantité de particules en suspension dans la barbotine, de leur taille, ainsi que de la viscosité de ladite barbotine. Un simple essai permet de déterminer cette vitesse d'encapsulation.

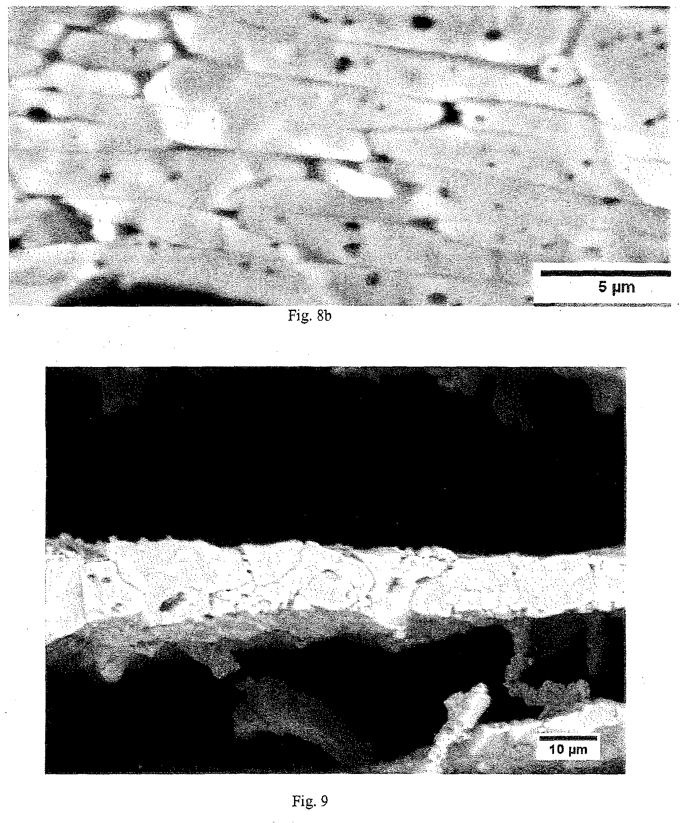

  La vitesse d'encapsulation est décrite par exemple dans «The encapsulation of particles and bubbles by an advancing solidification front », Park et Al., Journal of Fluid Mechanics, 2006, vol. 560, pp. 415-436. En particulier, la figure 9 de cette publication résume l'influence de la taille des particules sur la vitesse d'encapsulation.

- Par congélation « orientée », on entend une congélation effectuée progressivement suivant une direction déterminée.
- On appelle « sublimation » une opération, généralement sous vide, qui consiste à évaporer de la phase liquide solidifiée sans la faire fondre.
- On appelle « fusion » une opération qui consiste à fondre de la phase liquide solidifiée.
- Par « temporaire », on entend « éliminé du produit pendant le déliantage ou le frittage ».
- La section transversale médiane d'une particule ou d'un pore est la section dans un plan transversal, c'est-à-dire perpendiculaire à la direction de la longueur (ou « direction longitudinale ») de la particule ou du pore, qui s'étend à mi-longueur de ladite particule ou dudit pore. Par souci de clarté, on a référencé les longueurs des particules des première et deuxième fractions particulaires L et D, respectivement.
- Par « aplati », on considère un pore dont la largeur est plus de 5 fois, de préférence plus de 10 fois, voire plus de 20 fois supérieure à son épaisseur, les largeur et épaisseur étant mesurées dans une section transversale médiane du pore.
- On appelle « particules » les éléments solides constitutifs d'une poudre ou en suspension dans une barbotine. Dans un sol, la matière dissoute ne constitue donc pas une particule. La structure d'un gel, obtenu par gélification d'un sol, ne comporte sensiblement pas de particules. Après mise en forme et dans un souci de clarté, les particules de la barbotine sont appelées « grains ». Les caractéristiques dimensionnelles relatives à un grain sont celles de la particule correspondante. En particulier, un grain est considéré comme « anisotrope » lorsqu'il correspond à une particule anisotrope.

  Une particule est « orientable » lorsqu'elle s'oriente d'une manière particulière sous l'effet du passage du front de solidification. Une forme orientable, par exemple de plaquette ou de bâtonnet ou de grain de riz, ou une forme multi-facettée (avec un nombre de faces supérieur à 2 et inférieur à 35) rendent une particule orientable. Lorsqu'une particule multi-facettée ne comporte que deux faces, des essais ont montré qu'elle doit être anisotrope pour être orientable. Un simple essai permet de vérifier si une particule est orientable.

  Une particule (ou un grain) est considérée comme « multi-facettée » lorsqu'elle présente au moins 2 facettes, une facette étant une surface délimitée par une arête. Une forme « en noix » est un exemple de forme à deux facettes. Une particule (ou un grain) multi-facettée peut en particulier être « polyédrique », c'est-à-dire être limitée de toutes parts par des polygones plans. Une particule (ou un grain) multi-facettée peut en particulier être polyédrique « régulier » si toutes ses faces sont des polygones réguliers de même type et si tous ses sommets sont de même degré. Un polyèdre régulier possède une sphère tangente à chaque face en son centre. Un « cube » est un polyèdre régulier comportant 6 faces carrées.

- On appelle «direction d'orientation d'une particule orientable» la direction selon laquelle la particule orientable s'oriente sous l'effet du passage du front de solidification.
- Une « classe de forme » est une fraction qui regroupe les particules orientables présentant une forme déterminée, par exemple qui regroupe toutes les particules présentant une forme de plaquette (quelles que soient les dimensions de ces plaquettes).
- Une particule est considérée comme « anisotrope » lorsque le facteur d'allongement R entre sa longueur L et son épaisseur W1, soit R = L/W1, est supérieur à 4.
- La « longueur » L d'une particule est sa plus grande dimension observable sur un cliché pris suivant une direction perpendiculaire au plan sur lequel repose ladite particule.

  La « largeur » W2 et « l'épaisseur » W1 d'une particule sont les longueurs des grand et petit axes, respectivement, de l'ellipse la plus petite possible dans laquelle peut être inscrite la section transversale médiane de ladite particule. Une particule présente une forme en «bâtonnet» lorsqu'elle respecte les trois conditions suivantes :

1) $4 \leq L/W \leq 10$ et $W = (W1+W2)/2$,
2) $4 \leq L/W1$, et
3) $W2 < 1,5.W1$.

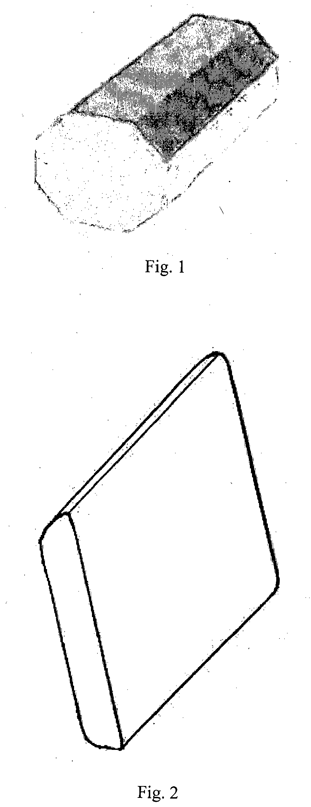

La figure 1 représente le schéma d'une particule se présentant sous la forme d'un bâtonnet.

Une particule présente une forme en «plaquette » lorsqu'elle respecte les deux conditions suivantes :

1) $4 \leq L/W1$, et
2) $W2 \geq 1,5\ W1$, de préférence $W2 \geq 2\ W1$.

De préférence, la section transversale d'une plaquette est sensiblement constante sur toute la longueur de la plaquette, est sensiblement polygonale et comporte au moins 4 côtés.

La figure 2 représente le schéma d'une particule se présentant sous la forme d'une plaquette.

Les particules sous la forme de plaquettes ou de bâtonnets se distinguent donc notamment des formes sphériques, fibreuses, des fils, des filaments, des aiguilles ou des cubes.

- La valeur « médiane » d'une propriété des particules d'un ensemble de particules est la valeur de cette propriété qui divise les particules dudit ensemble en première et deuxième populations égales en nombre, ces première et deuxième populations ne comportant que des particules présentant une valeur de ladite propriété supérieure ou égale, ou inférieure respectivement, à la valeur médiane. Par exemple, la longueur médiane d'un ensemble de particules est la longueur divisant les particules en première et deuxième populations égales en nombre, ces première et deuxième populations ne comportant que des particules présentant une longueur supérieure ou égale, ou inférieure respectivement, à la longueur médiane.

- On appelle « pore tubulaire » un pore qui présente la forme générale d'un tube débouchant par une de ses deux extrémités (« pore borgne ») ou par ses deux extrémités (« pore traversant »). Dans un produit selon l'invention, la direction d'un pore tubulaire tronconique est qualifiée de « direction longitudinale » et est fonction de la direction d'avancement du front de solidification.

- Un pore tubulaire tronconique est dit « macroscopique », ou appelé « macropore » s'il présente une section transversale médiane présentant un diamètre équivalent supérieur à $0,15\ \mu m$ et inférieur à $450\ \mu m$.

Pour un ensemble de pores tubulaires tronconiques parallèles, le plan transversal médian moyen est le plan perpendiculaire à la direction des pores tubulaires tronconiques et passant, en moyenne sur l'ensemble des pores, à mi-longueur desdits pores tubulaires tronconiques, la mi-longueur étant définie en moyenne sur l'ensemble des pores tubulaires tronconiques.

On appelle « section transversale » d'un pore tubulaire tronconique, la section de ce pore dans un plan de coupe transversal. La longueur d'un pore tubulaire tronconique est la dimension mesurée suivant son axe, entre ses deux extrémités.

Le caractère « tubulaire » d'un pore peut être déterminé par observation de photographies des pores, en particulier en perspective ou en coupe longitudinale.

- On appelle « diamètre équivalent » ou « taille » de l'ouverture ou d'une section d'un pore le diamètre d'un disque de même surface que ladite ouverture ou que ladite section.

- L'indice de convexité Ic d'un pore dans un plan de coupe transversal est le rapport Sp/Sc où Sp désigne la surface de la section transversale du pore, délimitée par son périmètre, et Sc désigne la surface convexe de cette section transversale, c'est-à-dire la surface de l'enveloppe convexe de cette section transversale.

Classiquement, on appelle « enveloppe convexe » la ligne de forme fermée convexe vers l'extérieur, de longueur minimale et contenant le périmètre dudit pore, le périmètre désignant classiquement la ligne de forme qui ferme la section du pore. L'enveloppe convexe se superpose donc aux portions convexes ou rectilignes du périmètre et suit des cordes rejoignant chaque fois deux portions convexes ou rectilignes séparées par une portion concave (vu de l'extérieur). Une enveloppe convexe peut être comparée à la région qui serait délimitée par un élastique tendu qui s'appuierait exclusivement sur le périmètre.

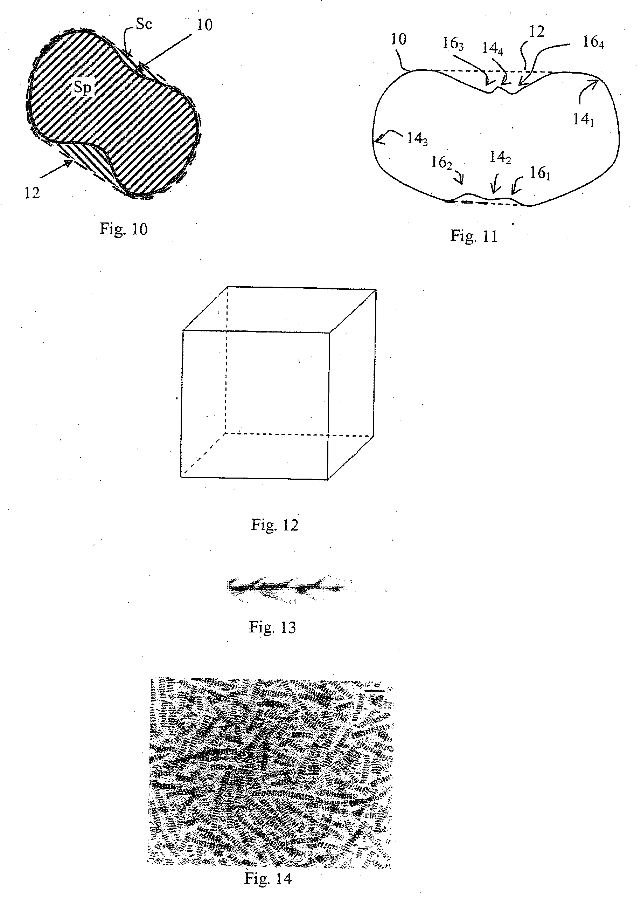

Par exemple, sur la figure 10, le périmètre 10 d'une section transversale d'un pore est représenté, ainsi que l'enveloppe convexe 12 de ce pore. Si on note Sp la surface du pore, délimitée par le périmètre 10, et $S_c$ la surface convexe dudit pore correspondant à la surface délimitée par l'enveloppe convexe 12, alors l'indice de convexité Ic est égal à $S_p/S_c$. L'indice de convexité Ic est donc égal à 100 % pour un cercle, une ellipse ou pour un ovale, mais aussi pour un polygone tel qu'un triangle, un parallélogramme, un hexagone, un pentagone. Il est inférieur à 100% pour les pores dont le périmètre présente, vu de l'extérieur, un ou plusieurs renfoncements.

La figure 11 représente un pore dont le périmètre présente des portions concaves $16_{1\text{-}4}$ et convexes $14_{1\text{-}4}$. Sur cette figure, l'enveloppe convexe 12 relie les deux portions convexes $14_1$ et $14_3$. Les portions convexes ($14_{1\text{-}2}$) sont

ignorées.

L'indice de convexité Ic peut être évalué avec la méthode suivante, non limitative :

L'échantillon à analyser est infiltré avec une résine, par exemple une résine époxy. Une tranche à analyser est découpée perpendiculairement à la direction de solidification, puis polie afin d'obtenir un bon état de surface, ledit polissage s'effectuant au minimum avec un papier grade 1200, de préférence avec une pâte diamantée. Des clichés sont ensuite réalisés à l'aide d'un microscope électronique à balayage (MEB), de préférence dans un mode utilisant les électrons rétrodiffusés (mode BSE) afin d'obtenir un très bon contraste entre la phase céramique et la résine. Chaque cliché présente au minimum 1280x960 pixels, sans la barre d'échelle. Le grandissement utilisé est tel que la largeur de l'image est comprise entre 50 fois et 100 fois la taille moyenne des pores. Un premier cliché peut être réalisé grâce à une estimation visuelle de la taille moyenne des pores. L'image est ensuite analysée à l'aide du logiciel imageJ, disponible sur le site http ://rsbweb.nih.gov/ij/ selon la méthode suivante :

- ouvrir l'image dans imageJ ;
- découper l'image (fonction « Crop ») pour enlever la barre d'échelle ou toute autre information complémentaire se trouvant sur l'image ;
- ajuster la luminosité avec la fonction « Image>Adjust>Brightness/contrast », puis cliquer sur « Auto » ;
- binariser l'image avec la fonction Multithresholder (« Plugin>Filter>Multithresholder »), puis choisir le mode « Isodata » pour fixer le seuil permettant de distinguer le matériau à analyser de la résine infiltrée ;
- s'assurer que les pores à analyser apparaissent bien en noir sur l'image (valeur 255 pour le blanc, 0 pour le noir). Dans le cas contraire, inverser l'image à l'aide de la fonction « Edit>Invert » ;
- analyser les pores à l'aide de la fonction « Analyse>Analyse particles ». Les paramètres pour l'analyse des pores peuvent être les suivants : « size min » : 0,2 x la taille moyenne de pores mesurée précédemment ; « size max » : aucune, « exclude on edges » pour ne pas analyser les pores interceptés par les bords de l'image, ne pas cocher l'option « include holes » ;
- vérifier que l'on a analysé au moins 50 pores. Dans le cas contraire, analyser d'autres images de façon à ce que le nombre total de pores analysés soit supérieur ou égal à 50 ;
- dans le tableau de résultats, pour chaque pore, relever l'indice de solidité (« solidity ») ;
- classer les pores par indice de solidité croissant ;
- tracer la fraction cumulée en nombre en fonction de l'indice de solidité Is.

L'indice de solidité mesuré de cette manière fournit une très bonne approximation de l'indice de convexité Ic moyen.

- On appelle « oxyde de zirconium totalement stabilisé », un oxyde de zirconium présentant une quantité d'oxyde de zirconium sous une forme cristallographique monoclinique inférieure à 1% en masse, le complément étant constitué d'oxyde de zirconium sous une forme cristallographique quadratique, stable et/ou métastable, et/ou cubique.
- Un matériau est dit « à fonction orientée » lorsqu'il présente au moins une propriété, autre que mécanique, « orientée », c'est-à-dire dont l'intensité est variable selon l'orientation de la mesure, dans une proportion telle qu'il existe au moins une direction selon laquelle ladite propriété est au moins 1,1 fois supérieure, à la valeur moyenne de ladite propriété selon les autres directions. Une telle propriété peut être par exemple une propriété électrique, thermique, diélectrique, magnétique ou encore optique. Ainsi, une particule en un matériau à fonction orientée présente au moins une propriété dont l'intensité est fonction de la direction selon laquelle la mesure de la propriété est effectuée. L'alumine et la silice ne sont pas des matériaux à fonction orientée, à la différence du nitrure de bore dont la diffusivité thermique est fonction de la direction dans laquelle elle est mesurée.
- On appelle « direction de fonction » une direction selon laquelle la fonction caractéristique d'un matériau à fonction orientée présente un extremum d'intensité.
- Par définition, une distribution « bimodale » fait apparaître deux catégories non contiguës ayant les valeurs les plus fortes, dits « pics principaux » ou « modes principaux ».
- Sauf indication contraire, une moyenne est une moyenne arithmétique.
- Sauf indication contraire, tous les pourcentages relatifs à la composition d'une barbotine selon l'invention sont des pourcentages volumiques par rapport au volume de la barbotine.
- Les pourcentages en volume d'un ensemble de particules correspondent à des pourcentages en considérant la somme des volumes de chacune des particules considérées. La somme de ces volumes est classiquement calculée par le rapport de la masse dudit ensemble de particules divisée par la masse volumique absolue du matériau desdites particules. Par exemple si la deuxième fraction particulaire représente moins de 20% « du volume de l'ensemble des particules céramiques », ou de manière équivalente « du volume des particules céramiques » ou « en pourcentage volumique sur la base de l'ensemble des particules céramiques » ou « en pourcentage volumique sur la base des particules céramiques », les volumes à comparer sont le volume des particules de la poudre constituant la deuxième fraction particulaire et le volume de l'ensemble des particules céramiques.

- La « masse volumique relative d'un produit » correspond au rapport égal à la masse volumique apparente du produit divisée par la masse volumique absolue du produit, exprimé en pourcentage.
- Par masse volumique apparente d'un produit, on entend au sens de la présente invention, le rapport égal à la masse du produit divisée par le volume qu'occupe ledit produit. Elle peut être mesurée par imbibition, selon le principe de la poussée d'Archimède
- Par masse volumique absolue d'un produit, on entend au sens de la présente invention, le rapport égal à la masse de matière sèche dudit produit après un broyage à une finesse telle qu'il ne demeure sensiblement aucune porosité fermée, divisée par le volume de ladite masse de matière sèche après broyage. Elle peut être mesurée par pycnométrie à hélium.
- Les différentes caractéristiques d'un produit selon l'invention peuvent être déterminées par les méthodes de caractérisation utilisées pour les exemples ci-dessous.

Brève description des figures

D'autres caractéristiques et avantages de l'invention apparaîtront encore à l'examen du dessin, fourni à titre illustratif et non limitatif, dans lequel :

- les figures 1 et 2 représentent schématiquement un bâtonnet et une plaquette, respectivement ;
- la figure 3 représentent schématiquement une coupe transversale d'une paroi d'un pore tubulaire tronconique d'un produit selon l'invention ;
- les figures 4, 5, 6, 7, 8a, 8b, 9 représentent des images prises à l'aide d'un microscope électronique à balayage (MEB) des produits des exemples 1, 2, 1, 2, 4 avant frittage, 4 après frittage, et 8, respectivement ;
- les figures 10 et 11 illustrent la méthode d'évaluation de l'indice de convexité ;

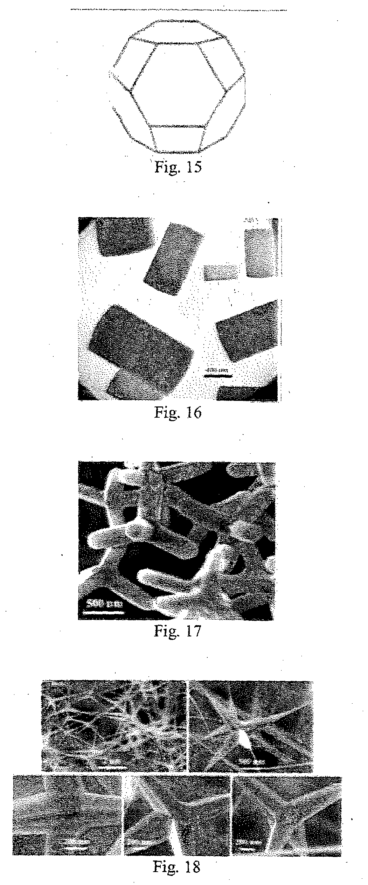

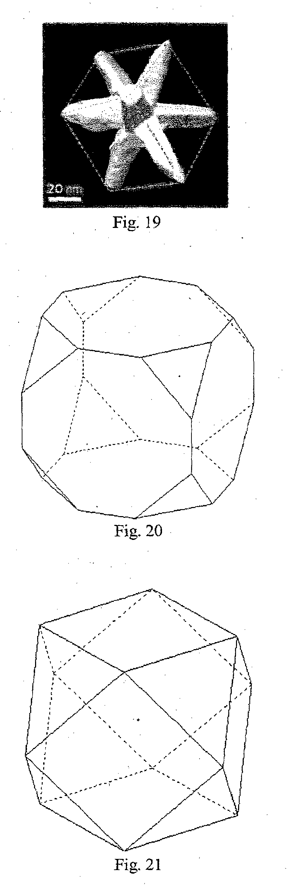

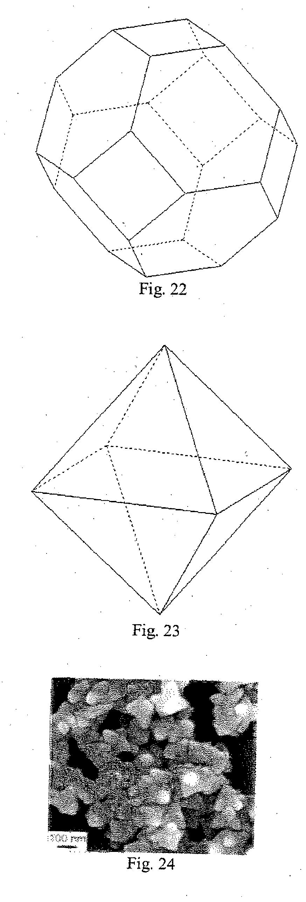

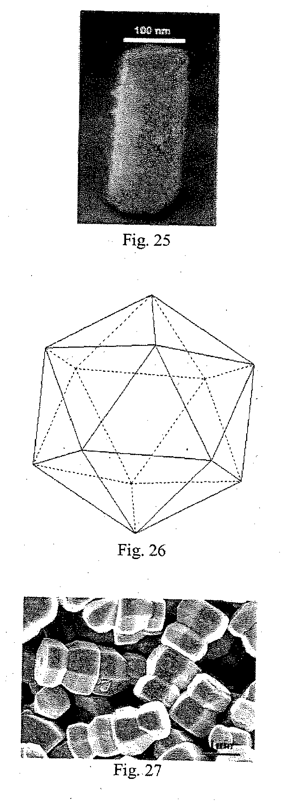

- les figures 12 à 28 représentent un cube, une fibre en dents de scie, des chaînes prismatiques, un pseudo-cubo-octaèdre, des cylindres carrés, des tétrapodes, des tétrapodes pointus, un octapode, un cube tronqué, un cubo-octaèdre, un octaèdre tronqué, un octaèdre, des étoiles, un pilier, un icosaèdre, des bipyramides hexagonales, des microtubes, respectivement ;
- la figure 29 représente la courbe de mesure de porosité au mercure réalisée sur le produit de l'exemple 5 ; et
- la figure 30, 31 respectivement, représente un produit comportant après l'étape e) des pores aplatis, et un produit dense obtenu par compression à l'étape e') du produit représenté sur la figure 30 respectivement.

Sur les figures, des références identiques ont été utilisées pour désigner des objets identiques ou analogues.

**Description détaillée**

**Procédé selon l'invention**

Un produit selon l'invention peut être fabriqué suivant un procédé comportant les étapes a) à h) ci-dessus.

**A l'étape a)** de préparation de la barbotine, on prépare une suspension d'une poudre de particules céramiques.

La quantité de particules en suspension est de préférence supérieure à 8% et/ou inférieure à 40%, de préférence inférieure à 25 %, en pourcentage en volume de la barbotine. Les particules céramiques représentent de préférence plus de 90%, de préférence plus de 95%, voire plus de 99%, voire sensiblement 100% du volume des particules en suspension.

Dans un mode de réalisation, la barbotine comporte de la silice, se présentant de préférence pour plus de 50 %, de préférence pour plus de 60 %, de préférence pour plus de 70 %, de préférence pour plus de 80 %, de préférence pour plus de 90 %, de préférence pour plus de 95%, de préférence pour plus de 99%, voire sensiblement complètement sous la forme de particules, en pourcentages en masse sur la base de la masse totale de silice.

L'ensemble de particules céramiques comporte de préférence :

- une première fraction particulaire constituée de particules orientables, de préférence anisotropes, présentant une longueur médiane $L'_{50}$ et représentant plus de 1% des particules céramiques, en pourcentage volumique sur la base de l'ensemble des particules céramiques ; et
- une deuxième fraction particulaire présentant une longueur médiane $D_{50}$ au moins dix fois inférieure à $L'_{50}$ (c'est-à-dire $D_{50} < L'_{50}/10$) et représentant plus de 5% des particules céramiques, en pourcentage volumique sur la base de l'ensemble des particules céramiques.

La première fraction particulaire est constituée de particules orientables, de préférence anisotropes, mais ne comprend pas nécessairement toutes les particules orientables, respectivement anisotropes de l'ensemble des particules céramiques.

La première fraction particulaire est constituée de particules orientables, de préférence anisotropes, mais ne représente pas nécessairement la totalité des particules orientables, ou anisotropes respectivement, de l'ensemble des particules céramiques. Selon l'invention, il doit exister au moins une telle première fraction particulaire, mais il peut en exister plusieurs. Une première fraction particulaire doit néanmoins représenter plus de 1% de l'ensemble des particules céramiques.

De même, la deuxième fraction particulaire est constituée de particules quelconque qui, ensemble, doivent présenter une longueur médiane $D_{50}$ au moins dix fois inférieure à $L'_{50}$. Selon l'invention, il doit exister au moins une telle deuxième fraction particulaire, mais il peut en exister plusieurs. Une deuxième fraction particulaire doit néanmoins représenter plus de 5% de l'ensemble des particules céramiques.

La première fraction particulaire représente de préférence plus de 2%, de préférence plus de 3%, de préférence plus de 5%, en volume des particules céramiques, voire des particules céramiques orientables, voire des particules céramiques anisotropes. La proportion de la première fraction particulaire n'est cependant pas limitée à ces plages et cette proportion peut être supérieure à 10%, supérieure à 20%, supérieure à 30%, supérieure à 40%, supérieure à 50%, supérieure à 60%, supérieure à 70%, supérieure à 80%, ou supérieure à 90%, voire de 100% en volume des particules céramiques, voire des particules céramiques orientables, voire des particules céramiques anisotropes.

La deuxième fraction particulaire présente une longueur médiane $D_{50}$ de préférence au moins quinze fois inférieure à $L'_{50}$, de préférence au moins vingt fois inférieure à $L'_{50}$, de préférence au moins trente fois inférieure à $L'_{50}$, de préférence au moins cinquante fois inférieure à $L'_{50}$.

La deuxième fraction particulaire peut être en particulier incluse dans la première fraction particulaire.

La proportion de la deuxième fraction particulaire peut être de préférence supérieure à 7%, de préférence supérieure à 10%, de préférence supérieure à 15%, voire supérieure à 20%, supérieure à 30%, supérieure à 40%, supérieure à 50%, supérieure à 60%, supérieure à 70%, supérieure à 80%, supérieure à 90%, supérieure à 95%, supérieure à 98%, en pourcentage volumique des particules céramiques, voire des particules céramiques orientables, voire des particules céramiques anisotropes.

La proportion de la deuxième fraction particulaire peut être supérieure à 7%, supérieure à 10%, de préférence supérieure à 15%, voire supérieure à 20%, supérieure à 30%, supérieure à 40%, supérieure à 50%, supérieure à 60%, supérieure à 70%, supérieure à 80%, supérieure à 90%, supérieure à 95%, supérieure à 98%, en pourcentage volumique des particules céramiques non anisotropes.

Dans un mode de réalisation, les première et deuxième fractions particulaires sont déterminées pour représenter ensemble, plus de 90%, plus de 95%, voire 100% de l'ensemble des particules céramiques, en pourcentage volumique. Le complément à 100% est de préférence constitué de particules céramiques présentant une longueur médiane inférieure, de préférence inférieure à 2 fois, inférieure à 5 fois la longueur médiane $L'_{50}$ de la première fraction particulaire.

Dans un mode de réalisation, la première fraction particulaire regroupe l'ensemble des particules orientables ou anisotropes, et la deuxième fraction particulaire regroupe l'ensemble des particules présentant une longueur D au moins cinq fois, de préférence au moins dix fois, voire au moins quinze fois inférieure à $L'_{50}$.

Dans un mode de réalisation, la première fraction particulaire regroupe l'ensemble des particules orientables ou anisotropes, et la deuxième fraction particulaire ne comporte que des particules non orientables, voire non anisotropes. De préférence, la longueur médiane $D_{50}$ est au moins douze fois inférieure à $L'_{50}$, de préférence au moins quinze fois inférieure à $L'_{50}$, de préférence au moins vingt fois inférieure à $L'_{50}$, de préférence au moins trente fois inférieure à $L'_{50}$, de préférence au moins cinquante fois inférieure à $L'_{50}$.

Dans un mode de réalisation,

- la première fraction particulaire constituée de particules orientables, de préférence anisotropes, représente plus de 50%, de préférence plus de 60%, de préférence plus de 70%, de préférence plus de 80%, voire plus 90%, en volume des particules céramiques, et
- la deuxième fraction particulaire représente de préférence plus de 7%, de préférence plus de 10%, de préférence plus de 15%, en volume de particules céramiques, et
- plus de 90%, plus de 95%, voire sensiblement 100% en volume des particules de la deuxième fraction particulaire sont de préférence non anisotropes, voire non orientables, et
- les première et deuxième fractions particulaires représentent ensemble de préférence plus de 90%, de préférence plus de 95%, voire 100% du volume de l'ensemble des particules céramiques, et
- la distribution granulométrique des particules céramiques est bimodale, les deux modes étant centrés sur les longueurs $D_a$ et $D_b$, $D_a$ étant de préférence inférieur à $D_b/10$, $D_b$ et $D_a$ étant de préférence centrés sur les longueurs $L'_{50}$ et $D_{50}$, respectivement.

Dans ce mode de réalisation, le procédé comporte, de préférence, une étape de frittage g).

Dans un mode de réalisation,

- la première fraction particulaire constituée de particules orientables, de préférence anisotropes, représente moins de 50%, de préférence moins de 30%, de préférence moins de 15% et plus de 5%, en volume des particules céramiques, et
- la première fraction particulaire présente un facteur d'allongement moyen, Rm, de préférence supérieur à 10, voire supérieur à 15, et
- plus de 90%, plus de 95%, voire sensiblement 100% en volume des particules de la deuxième fraction particulaire sont de préférence non anisotropes, voire non orientables, et
- les première et deuxième fractions particulaires représentent ensemble de préférence plus de 95%, voire 100% de l'ensemble des particules céramiques, et
- la distribution granulométrique des particules céramiques est bimodale, les deux modes étant centrés sur les longueurs $D_a$ et $D_b$, $D_a$ étant de préférence inférieur à $D_b/10$, $D_b$ et $D_a$ étant de préférence centrés sur les longueurs $L'_{50}$ et $D_{50}$, respectivement.

Dans ce mode de réalisation, le procédé comporte, de préférence, une étape de frittage g). Dans un mode de réalisation,

- la première fraction particulaire constituée de particules orientables, de préférence anisotropes, représente plus de 80%, de préférence plus 90%, voire plus de 95%, voire sensiblement 100%, en volume des particules céramiques, et
- les particules de la première fraction particulaire sont en un matériau à fonction orientée, et
- la deuxième fraction particulaire représente moins de 20%, de préférence moins de 15%, de préférence moins de 10%, de préférence moins de 5% du volume de l'ensemble des particules céramiques, et
- plus de 90%, plus de 95%, voire sensiblement 100% en volume des particules de la deuxième fraction particulaire sont de préférence non anisotropes, voire non orientables, et
- les première et deuxième fractions particulaires représentent ensemble de préférence plus de 90%, de préférence plus de 95%, voire 100% du volume de l'ensemble des particules céramiques, et
- la distribution granulométrique des particules céramiques est bimodale, les deux modes étant centrés sur les longueurs $D_a$ et $D_b$, $D_a$ étant de préférence inférieur à $D_b/10$, $D_b$ et $D_a$ étant de préférence centrés sur les longueurs $L'_{50}$ et $D_{50}$, respectivement.

Dans ce mode de réalisation, le procédé comporte, de préférence, une étape de frittage g).

Dans un mode de réalisation,

- la première fraction particulaire constituée de particules orientables, de préférence anisotropes, représente moins de 50%, de préférence moins de 30%, de préférence moins de 15% et plus de 5%, en volume des particules céramiques, et
- les particules de la première fraction particulaire constituée de particules orientables, de préférence anisotropes, sont en un matériau à fonction orientée, et
- plus de 90%, plus de 95%, voire sensiblement 100% en volume des particules de la deuxième fraction particulaire sont de préférence non anisotropes, voire non orientables, et
- les première et deuxième fractions particulaires représentent ensemble de préférence plus de 95%, voire 100% du volume de l'ensemble des particules céramiques, et
- la distribution granulométrique des particules céramiques est bimodale, les deux modes étant centrés sur les longueurs $D_a$ et $D_b$, $D_a$ étant de préférence inférieur à $D_b/10$, $D_b$ et $D_a$ étant de préférence centrés sur les longueurs $L'_{50}$ et $D_{50}$, respectivement.

Dans ce mode de réalisation, le procédé comporte une étape de frittage g).

Particules orientables

Dans un mode de réalisation, la quantité de particules orientables, voire anisotropes est inférieure à 50%, de préférence inférieure à 30%, de préférence inférieure à 15% sur la base du volume de l'ensemble des particules céramiques. Avantageusement, la transformation, lors du frittage, des particules de la deuxième fraction particulaire qui ne sont pas orientables ou anisotropes, en particules orientables ou anisotropes, respectivement, en est favorisée. La forme de ces dernières peut être similaire à celle des particules orientables, ou anisotropes respectivement, environnantes. Comme on verra plus en détail dans la suite de la description, il en résulte une augmentation remarquable de la densité apparente des parois des macropores et/ou une modification remarquable des propriétés dont l'intensité est variable en fonction de la direction considérée lorsque les particules orientables, de préférence anisotropes, formées après frittage sont en un matériau à fonction orientée.

Dans un mode de réalisation, la distribution granulométrique des particules céramiques est bimodale, les deux modes étant centrés sur des longueurs $D_a$ et $D_b$, respectivement, $D_a$ étant de préférence inférieur à $D_b/10$.

Dans un mode de réalisation préféré, $D_b$ est égal à $L'_{50}$ et $D_a$ est égal à $D_{50}$.

De préférence, la fraction des particules céramiques non anisotropes, voire non orientables, présente une longueur médiane inférieure à dix fois la longueur médiane des particules céramiques anisotropes, voire orientables respectivement, $L_{50}$, en particulier si l'ensemble de particules céramiques comporte moins de 80%, en pourcentage volumique, de particules céramiques anisotropes, voire orientables respectivement.

Dans un mode de réalisation, la distribution granulométrique des particules céramiques orientables, voire anisotropes, est bimodale, les deux modes étant centrés sur des longueurs $L_a$ et $L_b$, respectivement, $L_a$ étant de préférence inférieur à $L_b/10$. Dans un mode de réalisation, $L_b$ est égal à $L'_{50}$ et La est égal à $D_{50}$.

La longueur médiane des particules céramiques orientables, de préférence anisotropes, voire des particules de la première fraction particulaire, est de préférence supérieure à 0,1 $\mu$m, de préférence supérieure à 0,2 $\mu$m, de préférence supérieure à 0,3 $\mu$m et/ou inférieure à 50 $\mu$m, de préférence inférieure à 25 $\mu$m, de préférence inférieure à 10 $\mu$m, voire inférieure à 5 $\mu$m, voire inférieure à 1 $\mu$m.

L'épaisseur moyenne des particules orientables, de préférence anisotropes, voire des particules de la première fraction particulaire, $W1_{50}$ est de préférence supérieure à 0,02 $\mu$m, de préférence supérieure à 0,05 $\mu$m, de préférence supérieure à 0,1 $\mu$m, de préférence supérieure à 0,3 $\mu$m, de préférence supérieure à 0,5 $\mu$m et/ou inférieure à 20 $\mu$m, de préférence inférieure à 10 $\mu$m, de préférence inférieure à 5 $\mu$m, de préférence inférieure à 3 $\mu$m.

Le facteur d'allongement moyen de l'ensemble des particules céramiques orientables, de préférence anisotropes, voire des particules de la première fraction particulaire, Rm (moyenne arithmétique des facteurs d'allongement R, pour l'ensemble des particules céramiques orientables, respectivement anisotropes,) est de préférence supérieur à 10, voire supérieur à 15 et/ou est de préférence inférieur à 900, voire inférieur à 500, voire inférieur à 200.

Dans un mode de réalisation, $Rm \leq 15$, en particulier lorsque $W2_{50} < 1,5.W1_{50}$.

Dans un mode de réalisation préféré, plus de 50%, plus de 70%, plus de 90%, plus de 95%, voire sensiblement 100% en nombre des particules céramiques orientables, voire des particules de la première fraction particulaire, sont des plaquettes.

Les particules orientables multi-facettées de l'ensemble des particules céramiques, voire des particules de la première fraction particulaire, comportent de préférence moins de 30 facettes, de préférence moins de 20 facettes, de préférence moins de 15 facettes, voire moins de 10 facettes, et/ou de préférence plus de 3 facettes, de préférence plus de 4 facettes.

Les particules orientables multi-facettées de l'ensemble des particules céramiques, voire des particules de la première fraction particulaire, sont de préférence choisies parmi les cubes, les fibres en dents de scie, les chaines prismatiques, les pseudo-cubo-octaèdres, les cylindres carrés, les tétrapodes, les tétrapodes pointus, les octapodes, les cubes tronqués, les cubo-octaèdres, les octaèdres tronqués, les octaèdres, les pseudo-octaèdres, les étoiles, les piliers, les icosaèdres, les cylindres hexagonaux, les plaquettes, les lentilles, les plaquettes triangulaires, les microprismes, les bipyramides hexagonales, les microtubes, les bâtonnets et leurs mélanges.

De préférence, à l'étape a), plus de 80%, de préférence plus de 90%, de préférence plus de 95% en nombre des particules céramiques orientables, voire anisotropes, voire des particules de la première fraction particulaire, peuvent être classées dans moins de 5, de préférence moins de 4, de préférence moins de 3 classes de forme, de préférence une classe de forme, une classe de forme regroupant l'ensemble des particules orientables présentant une forme déterminée.

De préférence, on n'introduit dans la barbotine qu'une poudre de particules orientables présentant la même forme, par exemple une poudre de particules en forme de plaquettes.

Classiquement, une classe de forme correspond à une source de matière première, par exemple une poudre de plaquettes de nitrure de bore. La limitation préférée du nombre de classes de forme signifie donc que la forme des particules orientables, voire anisotropes, n'est pas aléatoire, la plupart de ces particules ayant une forme choisie dans un « catalogue » de formes limité à 5 formes au maximum.

Dans un mode de réalisation, plus de 50%, plus de 60%, plus de 70%, plus de 80%, plus de 90%, voire sensiblement 100%, en pourcentage en volume, des particules orientables, voire anisotropes, voire des particules de la première fraction particulaire, appartiennent à une même classe de forme.

De préférence, les particules d'une classe de forme sont fabriquées suivant le même procédé de fabrication et sont constituées en le même matériau.

De préférence, le plus petit angle entre la direction d'orientation des particules orientables et au moins une direction de fonction est sensiblement constant. Il peut être inférieur à 25°, voire inférieur à 10°, voire même inférieur à 5°, de préférence sensiblement nul. En variante, il peut être supérieur à 65°, voire supérieur à 80°, voire même supérieur à 85°, de préférence sensiblement égal à 90°.

Particules orientables en un matériau à fonction orientée.

Selon l'invention, l'ensemble des particules céramiques comporte plus de 1%, de préférence plus de 2%, de préférence plus de 3%, de préférence plus de 5%, en volume des particules céramiques, de particules céramiques orientables en un matériau à fonction orientée. La proportion de particules céramiques orientables en un matériau à fonction orientée n'est cependant pas limitée à ces plages et cette proportion peut être supérieure à 10%, supérieure à 20%, supérieure à 30%, supérieure à 40%, supérieure à 50%, supérieure à 60%, supérieure à 70%, supérieure à 80%, ou supérieure à 90%, voire de 100% en volume des particules céramiques.

Dans un mode de réalisation, les particules de la première fraction particulaire, voire les particules céramiques anisotropes, voire les particules céramiques orientables, voire toutes les particules céramiques, sont en un matériau à fonction orientée.

De préférence, ledit matériau à fonction orientée présente au moins une propriété, autre que mécanique, telle qu'il existe au moins une direction selon laquelle ladite propriété est au moins 1,2 fois, de préférence 1,5 fois, de préférence 2 fois, de préférence 3 fois, de préférence 5 fois, voire 10 fois, supérieure, à la valeur moyenne de ladite propriété selon les autres directions.

La fonction orientée peut notamment correspondre à des propriétés thermiques, électriques, piézoélectriques ou magnétiques. De préférence, la forme des particules orientables est choisie de manière que l'orientation de ces particules résultant de l'étape c) de congélation conduise à orienter la fonction orientée suivant une direction ou un plan privilégié, c'est-à-dire à accroitre ou diminuer cette fonction suivant cette direction ou ce plan.

En outre, le nombre ou la densité de particules orientées permettent ainsi de faire varier l'intensité de ladite propriété.

Par exemple, il existe des matériaux à fonction orientée pour lesquels la conductivité thermique est différente selon la direction considérée, et maximale suivant un plan particulier, par exemple des particules de nitrure de bore. De telles particules peuvent se présenter sous la forme de plaquettes, la conductivité thermique étant maximale dans le plan général des plaquettes. Une paroi constituée d'un empilement de telles plaquettes de manière que les plans de conductivité maximale des particules soient sensiblement parallèles permet ainsi une diffusion de la chaleur maximale dans la paroi suivant ces plans.

Il existe également des particules orientables pour lesquelles la réponse piézoélectrique est différente selon la direction considérée, et maximale suivant un plan particulier, notamment des particules de niobate de sodium et de potassium (ou « potassium sodium Niobate » en anglais). Une paroi constituée d'un empilement de telles particules de manière que les plans de réponse piézoélectrique maximale des particules soient sensiblement parallèles permet ainsi de favoriser cette réponse dans la paroi suivant ces plans.

Particules de la deuxième fraction particulaire

Les particules de la deuxième fraction particulaire peuvent être, totalement ou partiellement, orientables ou non orientables, anisotropes ou non anisotropes.

Dans un mode de réalisation, la deuxième fraction particulaire représente de préférence plus de 80%, plus de 90%, voire plus de 95% des particules céramiques.

Fraction complémentaire aux particules orientables ou aux particules anisotropes

La fraction des particules céramiques complémentaire aux particules orientables ou aux particules anisotropes peut être constituée, totalement ou partiellement, de particules de la deuxième fraction particulaire, mais aussi de particules plus grosses.

La longueur médiane des particules céramiques de cette fraction particulaire complémentaire est de préférence inférieure, de préférence inférieure à 2 fois, inférieure à 5 fois la longueur médiane $L'_{50}$ de la première fraction particulaire. La qualité de l'empilement des particules orientables, de préférence anisotropes, en est avantageusement améliorée.

Dans un mode de réalisation, la fraction complémentaire aux particules orientables ou aux particules anisotropes est constituée par la deuxième fraction particulaire.

Sous réserve que l'ensemble des particules céramiques comporte plus de 1% de particules céramiques orientables en un matériau à fonction orientée, les matériaux constituant les autres particules céramiques orientables, voire anisotropes, les particules céramiques de la deuxième fraction particulaire, les particules de la fraction complémentaire aux particules orientables ou aux particules anisotropes et les particules de la première fraction particulaire peuvent être en des matériaux $M_A$, $M_B$, $M_C$, et $M_D$ respectivement, identiques ou différents.

Dans un mode de réalisation, le matériau des particules céramiques de la deuxième fraction particulaire présente une température de fusion supérieure à la température de frittage. De préférence, le matériau $M_A$ et/ou le matériau $M_B$ et/ou le matériau $M_C$ et/ou le matériau $M_D$ comporte(nt), voire est (sont) choisi(s) parmi les oxydes, les nitrures, les carbures, les carbo-oxy-nitrures, le graphite, le graphène et leurs mélanges, de préférence choisi(s) dans le groupe A formé par l'oxyde de zirconium ou zircone ($ZrO_2$), l'oxyde de zirconium partiellement stabilisé, l'oxyde de zirconium stabilisé, l'oxyde d'yttrium ($Y_2O_3$), l'oxyde d'yttrium dopé, de préférence l'oxyde d'yttrium dopé à l'oxyde de samarium, l'oxyde de titane ($TiO_2$), les aluminosilicates comme la mullite, la cordiérite ($Al_3Mg_2AlSi_5O_{18}$), l'oxyde d'aluminium ou alumine ($Al_2O_3$), les alumines hydratées, et en particulier la boehmite, l'oxyde de magnésium (MgO), le talc ($Mg_3Si_4O_{10}(OH)_2$), l'oxyde de nickel (NiO), les oxydes de fer (FeO, $Fe_2O_3$, $Fe_3O_4$), l'oxyde de cérium, l'oxyde de cérium dopé, les oxydes de structure pérovskite, en particulier les gallates, les composés comportant du lanthane du type $LaAlO_3$ ou $LaGaO_3$ ou $La_{(1-x)}Sr_xMO_3$, avec $0 \leq x \leq 1$ et M un élément choisi dans le groupe formé du chrome, du cobalt, du magnésium, du fer, du gadolinium, du manganèse et de leurs mélanges ; les oxydes de structure pérovskite dopés avec du platine et/ou du palladium et/ou du rhodium et/ou de l'or et/ou de l'argent, par exemple $La_{(1-x)}Sr_xM_{(1-y)}M'_yO_3$ avec $0 \leq x \leq 1$, $0 \leq y \leq 0,15$, M étant un élément choisi dans le groupe formé du chrome, du cobalt, du magnésium, du fer, du gadolinium, du manganèse et de leurs mélanges, M' étant un élément choisi dans le groupe formé du platine, du palladium, du rhodium, de l'or, de l'argent et leurs mélanges, les composés comportant du titane du type $La_4Sr_8Ti_{11}Mn_{1-x}Ga_xO_{38}$ avec $0 \leq x \leq 1$ et $La_4Sr_8Ti_{12-n}Mn_nO_{38}$ avec $0 \leq n \leq 1$, les composés du type $BaTiO_3$, $BaZrO_3$, $(1-x)[Pb(Mg_{1/3}Nb_{2/3})O_3]-x[PbTiO_3]$, avec x compris entre 0 et 1, $Pb(Mg_{0,25}Nb_{0,75})O_3$, $Ba(Zn_{0,25}Nb_{0,75})O_3$, $Pb(Zn_{0,25}Nb_{0,75})O_3$, $PbTiO_3$, $CaCu_3Ti_4O_{12}$, les composés de structure du type bimevox, par exemple $Bi_2V_{1-x}Me_xO_z$ avec $0 \leq x \leq 1$, z permettant d'assurer l'électroneutralité, et Me un élément choisi dans le groupe formé du magnésium, de l'aluminium, du silicium, du titane, du cobalt, du nickel, du cuivre, du zinc, du manganèse, de l'antimoine, du tantale, du niobium, du chrome, du molybdène, du tungstène, de l'uranium et de leurs mélanges, les composés de structure du type lamox, par exemple $La_2Mo_2O_9$, les composés de structure apatite, par exemple $Me'_{10}(XO_4)_6Y'_2$ dans lequel Me' est un cation métallique choisi dans le groupe formé de $Ca^{2+}$, de $Cd^{2+}$, de $Sr^{2+}$, de $Ba^{2+}$, de $Pb^{2+}$, de $Na^+$, de $K^+$, des cations de terres rares, de préférence $La^{3+}$ et $Nd^{3+}$, de $Al^{3+}$, de $U^{4+}$, de $Th^{4+}$, ($XO_4$) est un groupement anionique choisi parmi $PO_4^{3-}$, $SiO_4^{4-}$, $AsO_4^{3-}$, $MnO_4^-$, $SO_4^{2-}$, $CO_3^{2-}$, $HPO_4^{2-}$, $SiO_4^{4-}$, $GeO_4^{4-}$ et leurs mélanges, et Y' est un anion choisi parmi $F^-$, $Cl^-$, $OH^-$, $Br^-$, $I^-$, $CO_3^{2-}$, $O^{2-}$ et leurs mélanges, les composés de type $SrCe_{1-x}MxO_3$ avec $0 \leq x \leq 1$ et M une terre rare, M étant de préférence l'ytterbium, les composés du type $BaCe_{1-x}MxO_3$, avec $0 \leq x \leq 1$ et M une terre rare, par exemple le composé $BaCeO_3$, les composés de la famille $La_xSr_{1-x}ScO_3$ avec $0 \leq x \leq 1$, par exemple $La_{0,9}Sr_{0,1}ScO_3$, les zéolithes de structure $Na_{x1}Ca_{x2}Mg_{x3}Ba_{x4}K_{x5}Al_{x6}(Si_{x7}O_{x8})$, $x9H_2O$, $x1$ à $x9$ étant des entiers positifs ou nuls respectant les conditions suivantes : $x6 > 0$, $x7 > 0$, $x8 > 0$, $x9 > 0$ et $x1 + x2 + x3 + x4 + x5 > 0$, $(Li,Na,K)(Nb,Ta,Sb)O_3$, $KNbO_3$ éventuellement dopé de préférence avec du lithium et/ou du tantale et/ou du baryum, $NaNbO_3$ éventuellement dopé de préférence avec du lithium et/ou du tantale et/ou du baryum, $(K_{0,5}Na_{0,5})NbO_3$ éventuellement dopé de préférence avec du lithium et/ou du tantale et/ou du baryum, l'hématite, le nitrure d'aluminium, le nitrure de bore, de préférence le nitrure de bore hexagonal, le nitrure de silicium, le nitrure de titane, le carbure de titane, le carbure de silicium, le carbure de tungstène, le carbure de zirconium, le graphite, le graphène et leurs mélanges.

De préférence, l'oxyde de zirconium est stabilisé, partiellement et de préférence totalement, à l'oxyde d'yttrium et/ou à l'oxyde de calcium et/ou à l'oxyde de magnésium et/ou à l'oxyde de cérium et/ou à l'oxyde de scandium et/ou à l'oxyde de samarium et/ou à l'oxyde de strontium et/ou à l'oxyde de titane, de préférence à l'oxyde d'yttrium. De préférence, l'oxyde de cérium est dopé à l'oxyde de samarium et/ou à l'oxyde de gadolinium et/ou à l'oxyde d'yttrium et/ou à l'oxyde de fer, de préférence dopé à l'oxyde de gadolinium.

Dans un mode de réalisation, le matériau $M_A$ et/ou $M_B$ et/ou $M_C$ et/ou $M_D$ n'est pas magnétique, et/ou les particules céramiques anisotrope, voire les particules orientables, voire les particules céramiques, ne sont pas recouvertes, même partiellement, par un revêtement magnétique.

Phase liquide

La quantité de phase liquide, voire la quantité d'eau, est de préférence supérieure à 50%, de préférence supérieure à 60%, de préférence supérieure à 70%, de préférence supérieure à 80%, de préférence supérieure à 90%, en pourcentage en volume de la barbotine.

La phase liquide contient de préférence plus de 50%, de préférence plus de 60%, de préférence plus de 70%, de préférence plus de 80%, de préférence plus de 90% d'eau, de préférence plus de 95% d'eau, en pourcentage volumique sur la base de la phase liquide. La phase liquide peut être constituée d'eau.

Dans un mode de réalisation, la phase liquide peut comporter un alcool, de préférence en une quantité supérieure à 0,5%, de préférence supérieure à 1%, de préférence supérieure à 2%, de préférence supérieure à 3%, et/ou inférieure à 10%, voire inférieure à 5%, en masse sur la base de la masse de la phase liquide. De préférence ledit alcool est choisi dans le groupe forme par le méthanol, l'éthanol, le tert-butanol, et leurs mélanges.

Dans un mode de réalisation, la phase liquide ne comporte pas d'alcool.

Dans un mode de réalisation, la phase liquide est le 2-Methylpropan-2-ol.

De préférence, la phase liquide comporte un éther de cellulose, en particulier lorsque les particules céramiques orientables, voire anisotropes, sont des particules en nitrure de bore. De préférence, la quantité d'éther de cellulose est telle que le rapport (masse d'éther de cellulose, en grammes) / [(surface spécifique des particules céramiques, en $m^2/g$) x (masse des particules céramiques orientables, en grammes) est supérieur à 0,0003 $g/m^2$, supérieur à 0,0004 $g/m^2$, de préférence supérieur à 0,0005 $g/m^2$, de préférence supérieur à 0,0006 $g/m^2$ et inférieur à 0,004 $g/m^2$, inférieur à 0,035 $g/m^2$, de préférence inférieur à 0,003 $g/m^2$, de préférence inférieur à 0,002 $g/m^2$, voire inférieur à 0,0015 $g/m^2$. Les inventeurs ont découvert, de façon inattendue, que la présence d'un éther de cellulose permet de fabriquer une suspension présentant des viscosités très faibles, quel que soit le gradient de cisaillement.

L'éther de cellulose est de préférence un éther de cellulose de la famille des alkyls, de préférence une méthyl cellulose ou un éther de cellulose de la famille des hydroxyalkyls, de préférence une hydroxyethyl cellulose.

La quantité d'éther de cellulose est de préférence supérieure à 0,1%, voire supérieure à 0,3%, voire supérieure à 0,4% et/ou inférieure à 5%, voire inférieure à 4%, voire inférieure à 2,5%, voire inférieure à 2%, voire inférieure à 1,5%, voire inférieure à 1%, en pourcentage massique sur la base de la masse desdites particules céramiques.

Pendant le mélange, le pH de la barbotine est de préférence compris entre 3 et 12. La dégradation de l'éther de cellulose en est avantageusement réduite, voire supprimée. Le pH peut être ajusté par ajout d'acide(s) et/ou de base(s).

La barbotine contient de préférence au moins un liant, de préférence temporaire. De préférence la teneur en liant est comprise entre 0,5 et 5% en masse sur la base de la quantité de particules céramiques. Avantageusement, la résistance mécanique avant frittage en est améliorée. Les liants temporaires classiquement utilisés pour la fabrication de produits frittés peuvent être mis en oeuvre, par exemple l'alcool polyvinylique (PVA), les polyéthylènes glycol (PEG).

La barbotine peut encore contenir un dispersant facilitant l'obtention d'une suspension homogène. De préférence, la teneur en dispersant est comprise entre 0,1 et 10% en masse, sur la base de la quantité de poudre de particules céramiques. Les dispersants classiquement utilisés pour la fabrication de produits frittés par coulage en barbotine peuvent être mis en oeuvre, par exemple les polyméthacrylates d'ammonium comme le Darvan C, fabriqué par la société Vanderbilt.

La barbotine peut aussi contenir un agent anti-moussant. De préférence la teneur en agent anti-moussant est comprise entre 0,1 et 10% en masse sur la base de la quantité de poudre de particules céramiques. Les agents anti-moussants classiquement utilisés pour la fabrication de produits frittés par coulage en barbotine peuvent être mis en oeuvre, par exemple le CONTRASPUM CONC. Commercialisé par la société Zschimmer et Schwarz.

Dans un mode de réalisation, les particules céramiques, l'eau, le liant éventuel, le dispersant éventuel, l'agent anti-moussant éventuel représentent ensemble plus de 80%, plus de 90%, plus de 95%, plus de 99%, voire sensiblement 100% de la masse de la barbotine.

La barbotine peut aussi comporter un additif. De préférence la teneur en additif est comprise entre 0,01% et 20% en masse sur la base de la masse des particules céramiques et/ou des précurseurs de particules céramiques. L'additif peut être choisi parmi les composés classiquement utilisés comme antigels, en particulier dans le groupe constitué par le chlorure de sodium (NaCl), le glycérol, les carbohydrates tels que le sucrose et le tréhalose. De préférence, lorsque les particules céramiques orientables sont des particules en nitrure de bore, l'additif préféré est un carbohydrate, de préférence le sucrose. L'additif peut également être l'acétate de zirconium.

De préférence les différents constituants de la barbotine sont ajoutés sous agitation.

Le mélange des différents constituants de la barbotine peut être effectué suivant toute technique connue de l'homme du métier, par exemple en mélangeur, en turbulat, en broyeur à jarre avec des billes, de préférence de la même nature que la poudre céramique en suspension. L'intensité du mélange et/ou le temps de mélange est de préférence adapté de manière à ne pas casser les particules orientables. Pour cela, les particules orientables peuvent être introduites en dernier dans la barbotine préalablement mélangée.

Si un broyeur à jarre est utilisé, le temps de mélange est de préférence supérieur à 0,5 heure et inférieur à 20 heures. De préférence, un broyeur à jarre est utilisé, les particules orientables étant introduites dans une barbotine préalablement mélangée pendant 24 heures, le temps de mélange à partir de l'introduction des particules orientables dans la barbotine étant supérieur à 30 minutes et de préférence inférieur à 2 heures.

Le mélange peut être facilité à l'aide d'un passage de la barbotine aux ultrasons, avec une énergie de préférence supérieure à 70 Wh/kg de barbotine, de préférence supérieure à 100 Wh/kg, de préférence supérieure à 150 Wh/kg, tout en évitant que la température de la barbotine dépasse 30°C. Un système de refroidissement, par exemple une circulation d'eau, peut être prévue pour limiter l'augmentation de la température.

A l'étape b), la barbotine est de préférence coulée dans un moule adapté pour la congélation orientée de l'étape suivante.

De préférence, un procédé selon l'invention comporte également une opération d'élimination des bulles d'air, de préférence avant coulage de la barbotine dans le moule. L'élimination des bulles d'air s'effectue de préférence par un dégazage sous vide ou sous ultrasons.

A l'étape c), la barbotine est refroidie de manière à solidifier la phase liquide et former des cristaux de phase liquide solidifiée. Pour que les directions de croissance des différents cristaux soient sensiblement parallèles, la barbotine est progressivement solidifiée en créant puis en déplaçant, dans la barbotine, une zone de transition thermique rapide entre une région amont dans laquelle la phase liquide a été solidifiée et une région aval dans laquelle la phase liquide est toujours liquide. Son passage dans la barbotine conduit à la solidification de la phase liquide. C'est pourquoi cette zone est classiquement qualifiée de « front de solidification ».

La création et le déplacement d'un front de solidification, nécessaires à une congélation orientée de la barbotine, sont des techniques couramment utilisées dans le domaine de la « *texturation à la glace* », ou *« ice templating »*. Cette technologie est un mode de réalisation particulier du procédé général de *« congélation/élimination des cristaux congelés* », appelé en anglais *« freeze casting »*. De préférence, on utilise un liquide, en particulier de l'azote liquide, pour créer le front de solidification.

De préférence, la vitesse Vp du front de solidification est adaptée de manière que $e \leq 100.W1_{50}$, de préférence $e < 50.W1_{50}$, de préférence $e < 30.W1_{50}$, de préférence $e < 25.W1_{50}$.

Dans un mode de réalisation, la vitesse Vp du front de solidification est adaptée de manière que $W1_{50} \leq e \leq 16.W1_{50}$, de préférence $W1_{50} \leq e \leq 12.W1_{50}$, de préférence $W1_{50} \leq e \leq 4.W1_{50}$. De préférence dans ledit mode de réalisation,

- plus de 90%, plus de 95%, voire sensiblement 100% en volume des particules céramiques orientables, de préférence anisotropes, présentent une longueur L comprise entre 7 et 16 $\mu$m, une épaisseur W1 comprise entre 0,5 et 1 $\mu$m, et un facteur d'allongement L/W1 compris entre 10 et 20,
- les particules céramiques représentent entre 8 et 11% en volume du volume de la barbotine,
- les particules céramiques orientables, de préférence anisotropes, représentent plus de 90% en volume des particules céramiques, et
- la vitesse du front de solidification est comprise entre 15 $\mu$m/s et 25 $\mu$m/s.

Dans un mode de réalisation, $W1_{50} \leq e \leq 16.W1_{50}$, de préférence $3.W1_{50} \leq e \leq 15.W1_{50}$, de préférence $5.W1_{50} \leq e \leq 15.W1_{50}$, de préférence $10.W1_{50} \leq e \leq 15.W1_{50}$. De préférence dans ledit mode de réalisation,

- plus de 90%, plus de 95%, voire sensiblement 100% en volume des particules céramiques orientables, de préférence anisotropes, présentent une longueur L comprise entre 7 et 16 $\mu$m, une épaisseur W1 comprise entre 0,5 et 1 $\mu$m, et un facteur d'allongement L/W1 compris entre 10 et 20,
- les particules céramiques représentent entre 14 et 19% en volume du volume de la barbotine,
- les particules céramiques orientables, de préférence anisotropes, représentent plus de 90% en volume des particules céramiques, et
- la vitesse du front de solidification est comprise entre 10 $\mu$m/s et 20 $\mu$m/s.

Dans un mode de réalisation, $17.W1_{50} \leq e < 100.W1_{50}$, de préférence $20.W1_{50} \leq e \leq 50.W1_{50}$. De préférence dans ledit mode de réalisation,

- plus de 90%, plus de 95%, voire sensiblement 100% en volume des particules céramiques orientables, de préférence anisotropes, présentent une longueur L comprise entre 5 et 8 $\mu$m, une épaisseur W1 comprise entre 0,2 $\mu$m et 1 $\mu$m, et un facteur d'allongement L/W1 compris entre 10 et 20,
- les particules céramiques représentent entre 14 et 19% en volume du volume de la barbotine,
- les particules céramiques orientables, de préférence anisotropes, représentent plus de 90% en volume des particules céramiques, et
- la vitesse du front de solidification est comprise entre 7 $\mu$m/s et 15 $\mu$m/s.

Au passage du front de solidification, les nouveaux cristaux de phase liquide solidifiée s'orientent, puis croissent sensiblement selon la direction de solidification imposée par le gradient thermique. La direction de solidification correspond sensiblement à la direction d'avancement du front de solidification.

La taille des cristaux de phase liquide solidifiée dépend principalement de la vitesse de déplacement du front de solidification et du gradient thermique associé à ce front de solidification. Plus la vitesse du front de solidification est élevée, plus la taille des cristaux de phase liquide solidifiée est faible.

La taille des cristaux de phase liquide solidifiée peut également être modifiée par la composition de la barbotine, et en particulier par la présence éventuelle d'un liant et/ou par la taille des particules céramiques.

L'homme du métier sait ainsi adapter le procédé pour obtenir une épaisseur de paroi souhaitée. En particulier, il sait que pour diminuer l'épaisseur e, il suffit d'augmenter le gradient de température au passage du front de solidification et/ou augmenter la vitesse de refroidissement et/ou de diminuer la longueur des particules en suspension et/ou de diminuer la quantité de particules en suspension dans la barbotine, et réciproquement.

Une congélation orientée conduit à des pores tubulaires tronconiques macroscopiques (sauf conditions particulières décrites dans « Solidification of colloidal suspensions », Peppin et Al., J. Fluid Mech. (2006), vol. 554, pp. 147-166), à la différence des pores formés par coextrusion.

Lorsqu'un produit selon l'invention est destiné à être infiltré au moyen d'un matériau d'imprégnation, la forme tronconique des pores tubulaires améliore l'imprégnation.

La forme du front de solidification n'est pas limitative. En particulier, le front de solidification peut être plan à l'échelle du bloc fabriqué.

La direction de déplacement du front de solidification est de préférence droite, conduisant à des cristaux sensiblement rectilignes. Avantageusement, il est ainsi possible de créer de longs cristaux de phase liquide solidifiée, sensiblement parallèles les uns aux autres. La solidification de la phase liquide conduit à concentrer les particules céramiques dans les espaces entre les cristaux de phase liquide solidifiée. Lors de ce mouvement, les particules de la deuxième fraction particulaire se retrouvent emprisonnées entre les grosses particules, ce qui conduit à une augmentation de la densité apparente, notamment après frittage.

Plusieurs fronts de solidification, présentant des gradients thermiques et/ou des formes identiques ou différentes, peuvent être créés et déplacés, successivement ou simultanément, dans des directions identiques ou différentes, à des vitesses identiques ou différentes. En particulier, lorsque la barbotine a été coulée dans un moule, plusieurs fronts de solidification peuvent partir de différentes faces du moule, par exemple à partir de chacune des faces du moule. Les cristaux de phase liquide solidifiée sont alors orientés depuis l'extérieur vers le coeur du bloc de barbotine solidifiée.

De préférence, la direction de déplacement d'un front de solidification est sensiblement perpendiculaire à la surface d'où il est parti.

Dans un mode de réalisation, les conditions de congélation orientée sont adaptées pour former des cristaux de phase liquide solidifiée, présentant dans un plan transversal médian, une largeur plus de 5 fois, de préférence plus de 10 fois, voire plus de 20 fois supérieure à l'épaisseur du cristal de phase liquide solidifiée.

Les cristaux de phase liquide solidifiée présentent alors une forme générale lamellaire de faible épaisseur, lorsqu'observés dans un plan transversal médian.

Dans ce mode de réalisation, de préférence plus de 50%, de préférence plus de 70%, de préférence plus de 80 %, de préférence plus de 90%, de préférence plus de 95% en nombre, de préférence sensiblement tous les cristaux de phase liquide solidifiée sont sensiblement parallèles les uns aux autres.

Au cours de l'étape de congélation orientée, le front de solidification repousse en se déplaçant les particules de la barbotine dans les parois situées entre les lamelles de cristal de phase liquide solidifiée, formant ainsi suivant la largeur desdites lamelles des parois de préférence sensiblement planes et parallèles les unes aux autres.

La forme des cristaux de phase liquide solidifiée dépend en outre des conditions de germination et de croissance des premiers cristaux de phase liquide solidifiée initialement formés à l'étape c). L'homme du métier sait déterminer de telles conditions de germination. Par exemple, il peut utiliser une surface, à partir de laquelle la germination s'opère, comportant un motif de reliefs linéaires parallèles et espacées, comme décrit dans l'article « Architectural Control of Freeze Cast Ceramics Through Additives and Templating », E. Munch, E. Saiz, A.P. Tomsia, S. Deville, J. Am. Ceram. Soc., vol. 92, num. 7, pages 1534 à 1539 (2007). Les cristaux de phase liquide solidifiée croissent alors selon une direction en relation avec les motifs des reliefs linéaires. Par ailleurs, l'homme du métier sait déterminer l'épaisseur souhaitée des cristaux de phase liquide solidifiée, notamment en modifiant l'espacement entre les motifs de reliefs linéaires. L'homme du métier peut ainsi en partie obtenir une forme souhaitée de pores, qui subsistent après élimination des cristaux de phase liquide solidifiée, et notamment une forme aplatie dans une section transversale médiane.

En variante, pour obtenir des cristaux de phase liquide solidifiée présentant une forme lamellaire, aptes après l'étape e) à former des pores aplatis, un procédé de « congélation par coulage en bande », dénommé « freeze-tape casting » en anglais, tel que décrit dans l'article « Fabrication of Functionally Graded and Aligned Porosity in Thin Ceramic Substrates With the Novel Freeze-Tape Casting Process », S.W. Sofie, J. Am. Ceram. Soc, vol. 90, num. 7, pages 2024-2031, (2007), peut être mis en oeuvre.

La forme de la section transversale des pores dépend principalement de la vitesse du front de solidification.

La forme de la section transversale d'un pore peut aussi être modifiée par la présence d'additif dans la barbotine, tel que décrits précédemment, comme cela est aussi décrit dans l'article « Architectural Control of Freeze Cast Ceramics Through Additives and Templating », E. Munch, E. Saiz, A.P. Tomsia, S. Deville, J. Am. Ceram. Soc., vol. 92, num. 7, pages 1534 à 1539 (2007).

De préférence, la totalité de la barbotine est solidifiée lors de l'étape c).

**A l'étape d),** le bloc de barbotine solidifiée est démoulé. De préférence, les conditions de température sont adaptées pour éviter toute fusion des cristaux de phase liquide solidifiée.

**A l'étape e),** le bloc de barbotine solidifiée est placé dans des conditions de pression et de température conduisant à une élimination des cristaux de phase liquide solidifiée.

De préférence, l'élimination résulte d'une sublimation des cristaux de phase liquide solidifiée. Avantageusement, la sublimation s'effectue sensiblement sans déplacement des particules disposées entre ces cristaux. Par exemple, on peut sublimer les cristaux de phase liquide solidifiée en les réchauffant à très basse pression, typiquement à une pression inférieure à 0,5 mbar.

On peut également faire fondre les cristaux de phase liquide solidifiée, et laisser s'écouler le liquide obtenu.

La disparition d'un cristal de phase liquide solidifiée laisse place à un pore macroscopique délimité par une paroi principalement formée par les particules initialement en suspension dans la barbotine, la forme de ce pore correspondant sensiblement à la forme du cristal éliminé. Ainsi, la création de cristaux de phase liquide solidifiée allongés, sensiblement parallèles les uns aux autres, conduit-elle à la création de pores tubulaires, également parallèles les uns aux autres.

On obtient ainsi une préforme macroporeuse.

La présence d'un liant permet d'augmenter la résistance mécanique de la préforme macroporeuse.

L'étape e) se poursuit de préférence jusqu'à l'élimination de tous les cristaux de phase liquide solidifiée.

Dans le mode de réalisation décrit précédemment, où le bloc formé à l'étape c) comporte des cristaux lamellaires de phase liquide solidifiée, le procédé de fabrication peut comporter une **étape e'),** de préférence successive à l'étape e), consistant à comprimer ledit bloc selon une direction sensiblement parallèle à la direction de l'épaisseur des cristaux lamellaires de phase liquide solidifiée, de manière à obtenir un produit présentant une masse volumique relative supérieure à 85%, de préférence supérieure à 90%, voire supérieure à 95%.

Une telle étape permet avantageusement de fabriquer un produit dense comportant des grains orientés à fonction orientée. Un tel produit dense, éventuellement fritté respectivement, présente par unité de volume du produit, une intensité de la fonction orientée ainsi que des propriétés mécaniques (contrainte à rupture, ténacité) augmentées par rapport à celle du bloc à partir duquel il a été formé par compression, par rapport à un bloc obtenu à l'étape c) puis fritté respectivement.

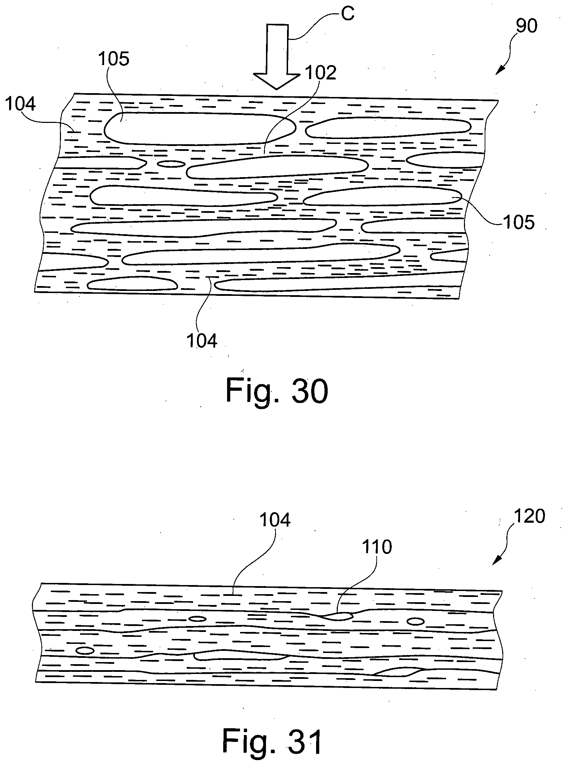

Comme illustré sur les figures 30 et 31 représentant un produit 90 observé dans une section transversale médiane, au cours de l'étape de compression C, les parois 102 constituées de particules orientables 104, situées entre les pores aplatis 105 résultant de l'élimination des cristaux lamellaires de phase liquide orientée, sont déplacées les unes par rapport aux autres et rapprochées jusqu'à entrer en contact. Cette étape de compression résulte alors en une suppression partielle, voire totale, des pores aplatis, et il ne subsiste alors qu'une porosité résiduelle 110.

Autrement dit, le produit dense obtenu par l'étape de compression est constitué d'un empilement de parois. L'épaisseur du produit dense 120 est de préférence plus de 2 fois, de préférence plus de 5 fois, de préférence plus de 10 fois, de préférence plus de 50 fois, de préférence plus de 100 fois, de préférence plus de 500 fois, voire plus de 1000 fois, supérieure à l'épaisseur moyenne dans un plan transversal médian d'une paroi séparant deux pores.

De préférence, l'épaisseur du produit dense est supérieure à 50 $\mu$m, de préférence supérieure à 100 $\mu$m, de préférence supérieure à 500 $\mu$m, voire supérieure à 1 mm, voire supérieure à 5 mm, voire supérieure à 1 cm, voire supérieure à 5 cm.

A l'étape c) ou à l'étape d) ou à l'étape e), une partie du bloc comportant plus de 50%, de préférence plus de 60%, de préférence plus de 70%, de préférence plus de 80%, de préférence plus de 90%, de préférence plus de 95%, de préférence sensiblement 100% de cristaux lamellaires de phase liquide solidifiée, de préférence sensiblement parallèles les uns aux autres, peut être sélectionnée puis extraite, par exemple par découpe ou estampage. Il est alors possible d'effectuer l'opération de compression décrite ci-dessus sur ladite partie de bloc, selon une direction sensiblement parallèle à la direction de l'épaisseur des cristaux lamellaires de phase liquide solidifiée.

A l'étape f), la préforme macroporeuse est disposée de manière à pouvoir être chauffée. Le liant éventuel est alors éliminé. Le temps de palier, la température et l'atmosphère du traitement de déliantage sont déterminés en fonction de la nature du ou des liants utilisés.

De préférence, un procédé comporte une **étape g)** de frittage, conduisant à une augmentation de la résistance mécanique. Le produit fritté poreux qui en résulte présente avantageusement une bonne résistance mécanique, même après élimination du liant. Le temps de palier, la température et l'atmosphère du frittage sont déterminés en fonction de la nature et des caractéristiques du produit à fabriquer. Ces paramètres sont bien connus de l'homme du métier.

Dans un mode de réalisation préféré, le déliantage et le frittage sont effectués lors du même traitement thermique, les étapes f) et g) étant confondues.

Dans un mode de réalisation préféré, l'étape e') de compression du bloc peut être réalisée avant et/ou conjointement à l'étape de déliantage f) et/ou à l'étape de frittage g). De préférence, l'étape de déliantage f) et/ou l'étape de frittage g) est alors effectuée par la méthode du frittage sous pression (« Hot Pressing » ou « HP » en anglais) ou par la méthode du SPS (« Spark Plasma Sintering » en anglais), bien connues de l'homme du métier. Le frittage permet alors de lier rigidement les parois mises en contact par l'étape de compression.

Le frittage peut être également effectué après mise en place de la préforme macroporeuse dans sa position de service, par exemple si un produit selon l'invention est utilisé comme support de catalyse dans un réacteur fonctionnant à haute température.

Le frittage peut transformer la morphologie des grains fins (correspondant aux particules de la deuxième fraction particulaire) disposés entre les grains orientables, en particulier anisotropes. Sous l'effet de cette transformation, les grains fins peuvent en particulier coalescer avec les grains orientables, par exemple de manière à former des grains orientables de plus grandes dimensions, améliorer l'empilement des grains et réduire les interstices entre lesdits grains. Il en résulte notamment une densité apparente et des propriétés mécaniques remarquables.

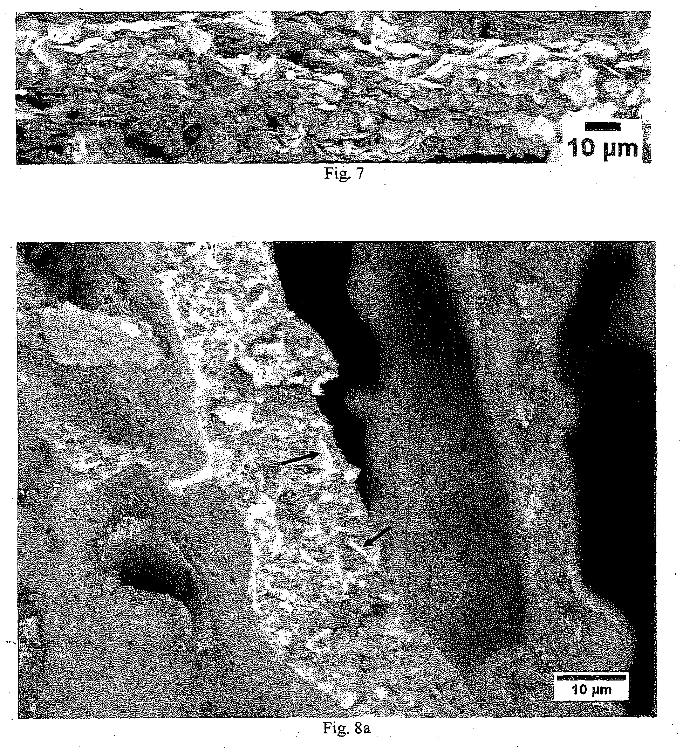

La figure 8b illustre la structure de la paroi résultant de la présence des particules de la deuxième fraction particulaire. Elle permet de constater qu'après frittage, les particules de la deuxième fraction particulaire ont coalescé avec les plaquettes initialement présentes afin de former des plaquettes, parfois de formes complémentaires à celle des plaquettes initiales. La microporosité résiduelle (tâches noires) en est avantageusement fortement réduite.

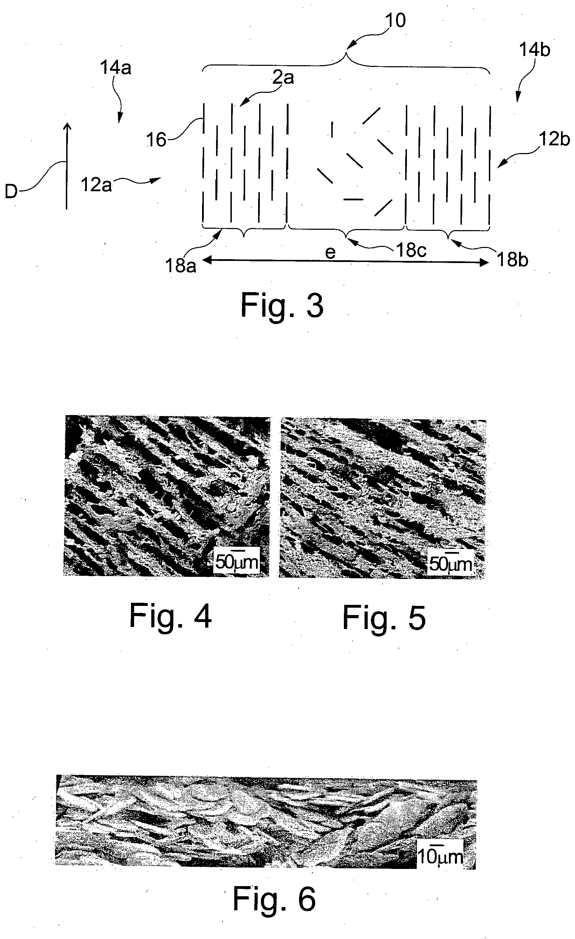

Cette structure de paroi contraste avec celle de la figure 6, pour laquelle la barbotine ne contenait sensiblement pas de particules de la deuxième fraction particulaire.

A l'étape h), le produit poreux peut être usiné par toute technique connue de l'homme du métier. De préférence, le produit poreux est usiné afin d'éliminer la zone de transition correspondant au démarrage du front de solidification et à l'établissement d'un régime stable de solidification, le régime de solidification étant dit « stable » lorsque la vitesse de croissance des cristaux de phase liquide solidifiée est sensiblement constante.

L'imprégnation peut être réalisée par toute technique connue de l'homme du métier. De préférence l'imprégnation est une imprégnation utilisant un média liquide.

Le matériau d'imprégnation peut être choisi parmi les céramiques, les métaux, les matériaux organiques et leurs mélanges, notamment choisi parmi :

- les matériaux du groupe A ci-dessus,
- un revêtement catalytique comprenant ou constitué par un matériau catalyseur choisi parmi

  - les métaux, de préférence le fer (Fe), le cobalt (Co), le nickel (Ni), le molybdène (Mo), le cuivre (Cu), le ruthénium (Ru), le rhodium (Rh), le platine (Pt), le palladium (Pd), l'or (Au), l'argent (Ag), l'iridium (Ir), l'osmium (Os), le rhénium (Re), et leurs mélanges ;
  - les oxydes, de préférence les oxydes de scandium (Sc), de titane (Ti), de vanadium (V), de chrome (Cr), de cobalt (Co), de cuivre (Cu), de palladium (Pd), de molybdène (Mo), de fer (Fe), de nickel (Ni), de tungstène (W), de rhénium (Re), les oxydes de structure pérovskite, les oxydes de structure fluorite, les zéolites, les oxydes de lanthanides, de préférence $CeO_2$, et leurs mélanges ;
  - les carbures, les oxycarbures de formules $(carbure)_{1-x}O_{x'}$, avec $0 < x < 1$ ;
  - et leurs mélanges ;

- l'aluminium, le cuivre, les alliages d'aluminium et de cuivre,
- les polymères, et notamment les résines
- et leurs mélanges.

De préférence, le matériau d'imprégnation est différent du matériau du produit selon l'invention dans lequel il est infiltré.

L'imprégnation peut conduire à un simple revêtement à la surface des pores tubulaires tronconiques ou à un remplissage partiel ou total desdits pores.

La forme particulière des pores tubulaires macroscopiques leur permet d'être infiltrés très efficacement par un matériau d'imprégnation, en particulier pour constituer un matériau composite. Cette efficacité est remarquable lorsque que l'ensemble des particules du matériau d'imprégnation, en général en suspension, présentent une longueur médiane inférieure à 0,1 fois le diamètre équivalent moyen des ouvertures larges des pores tubulaires tronconiques, de préférence inférieure à 0,1 fois le diamètre équivalent moyen des ouvertures étroites desdits pores. La longueur médiane de l'ensemble des particules du matériau d'imprégnation peut typiquement être comprise entre 0,01 $\mu$m et 4 $\mu$m. Les pores tubulaires tronconiques sont de préférence ouverts à leurs deux extrémités afin de faciliter encore la pénétration du matériau d'imprégnation.

De préférence, lorsqu'un produit selon l'invention est imprégné par un matériau d'imprégnation, la pénétration du matériau d'imprégnation est effectuée par les ouvertures larges des pores.

Un procédé selon l'invention permet de fabriquer un produit en un matériau céramique, donc particulièrement apte à résister aux températures élevées et aux chocs thermiques.

**Produit selon l'invention**

Un produit selon l'invention peut être fabriqué suivant un procédé selon l'invention.

Les matériaux constituant les grains céramiques orientables, voire anisotropes, les grains céramiques fins (c'est-à-dire correspondant aux particules de la deuxième fraction particulaire) et les grains de la fraction complémentaire aux grains orientables ou aux grains anisotropes peuvent être en des matériaux $M_A$, $M_B$ et $M_C$, respectivement, identiques ou différents.

Dans un mode de réalisation, le matériau des grains céramiques fins présente une température de fusion supérieure à la température de frittage.

De préférence, le matériau $M_A$ et/ou le matériau $M_B$ et/ou le matériau $M_C$ comporte(nt), voire est (sont) choisi(s) parmi les oxydes, les nitrures, les carbures, les carbo-oxy-nitrures et leurs mélanges. Ils peuvent en particulier être choisis dans le groupe A.

Dans un mode de réalisation, le produit comporte moins de 10% en volume de grains fins, voire moins de 5%, voire moins de 3%, voire moins de 1%, voire sensiblement pas de grains fins, les particules de la deuxième fraction particulaire ayant été transformées en plus gros grains lors du frittage.

La forme et les dimensions des grains céramiques, en particulier des grains céramiques orientables, voire anisotropes, peut correspondre à celle des particules céramiques, en particulier des particules céramiques orientables, voire anisotropes de la barbotine. Les quantités de grains céramiques et de grains céramiques orientables, voire anisotropes, en volume sur la base des grains constituant une paroi, peuvent correspondre aux quantités de particules céramiques et de particules céramiques orientables, voire anisotropes respectivement, en volume sur la base du volume des particules de la barbotine et en volume sur la base du volume des particules céramiques de la barbotine, respectivement.

De préférence, la fraction des grains céramiques qui ne sont pas anisotropes, voire qui ne sont pas orientables, présente une longueur médiane inférieure à dix fois la longueur médiane des grains céramiques anisotropes, voire orientables respectivement, en particulier si l'ensemble de grains céramiques dans lesdites parois comporte moins de 80%, en pourcentage volumique, de grains céramiques anisotropes ou orientables, respectivement.

Pores tubulaires tronconiques

De préférence, lesdits pores tubulaires tronconiques sont sensiblement adjacents les uns aux autres de manière que les plans transversaux définissant leurs sections transversales médianes respectives soient sensiblement confondus avec le plan transversal médian moyen. Le diamètre équivalent moyen des sections transversales médianes pour l'ensemble desdits pores tubulaires tronconiques peut alors avantageusement être facilement déterminé par analyse d'une image d'une coupe du produit selon ce plan transversal médian moyen.

Le diamètre équivalent moyen des sections transversales médianes des pores tubulaires tronconiques est de préférence supérieur à 0,5 $\mu$m, de préférence supérieur à 1 $\mu$m, voire supérieur à 2 $\mu$m, voire supérieur à 5 $\mu$m et/ou de préférence inférieur 400 $\mu$m, de préférence inférieur à 300 $\mu$m, de préférence inférieur à 270 $\mu$m, de préférence inférieur à 200 $\mu$m, voire inférieur à 150 $\mu$m, voire inférieur à 100 $\mu$m, voire inférieur à 50 $\mu$m, voire inférieur à 15 $\mu$m, voire inférieur à 10 $\mu$m.

Dans un mode de réalisation préféré, dans le plan transversal médian moyen, au moins 50% en nombre des pores tubulaires tronconiques (en considérant l'ensemble des pores tubulaires tronconiques visibles dans le plan de coupe transversal médian moyen) présentent un indice de convexité Ic supérieur à 87%, l'indice de convexité d'un pore étant égal au rapport Sp/Sc des surfaces Sp et Sc délimitées par le périmètre et par l'enveloppe convexe dudit pore, respectivement. Autrement dit, ces pores tubulaires tronconiques sont sensiblement lisses.

La forme des pores tubulaires tronconiques est de préférence telle que, dans le plan de coupe transversal médian moyen :

- au moins 60%, de préférence au moins 70%, en nombre des pores présentent un indice de convexité Ic et/ou un indice de solidité Is supérieur à 87%, et/ou
- au moins 40%, de préférence au moins 44%, de préférence au moins 54%, en nombre des pores présentent un indice de convexité Ic et/ou un indice de solidité Is supérieur à 88%, et/ou
- au moins 30%, de préférence au moins 36%, de préférence au moins 40%, de préférence au moins 44%, de préférence au moins 50%, en nombre des pores présentent un indice de convexité Ic et/ou un indice de solidité Is supérieur à 89%, et/ou
- au moins 24%, de préférence au moins 30%, de préférence au moins 36%, de préférence au moins 40%, de préférence au moins 44%, de préférence au moins 50%, en nombre des pores présentent un indice de convexité Ic et/ou un indice de solidité Is supérieur à 90%, et/ou
- au moins 20%, de préférence au moins 24%, de préférence au moins 30%, de préférence au moins 35%, de préférence au moins 40%, de préférence au moins 45%, en nombre des pores présentent un indice de convexité Ic et/ou un indice de solidité Is supérieur à 91 %, et/ou
- au moins 16%, de préférence au moins 20%, de préférence au moins 24%, de préférence au moins 30%, de préférence au moins 40%, en nombre des pores présentent un indice de convexité Ic et/ou un indice de solidité Is supérieur à 92%, et/ou
- au moins 4%, de préférence au moins 8%, de préférence au moins 10%, de préférence au moins 20%, en nombre des pores présentent un indice de convexité Ic et/ou un indice de solidité Is supérieur à 93%.

La section transversale des pores tubulaires tronconiques peut être circulaire ou non. En particulier, elle peut être polygonale, et notamment hexagonale convexe.

Dans un mode de réalisation, la section transversale d'un pore tubulaire tronconique est aplatie. Un tel pore aplati peut être obtenu par élimination d'un cristal de phase liquide solidifiée de forme lamellaire formé à l'étape c) du procédé selon l'invention. De préférence, plus de 50%, voire plus de 70%, voire plus de 90%, voire plus de 95%, voire plus de 99%, voire sensiblement 100% en nombre des pores tubulaires tronconiques sont aplatis.

La géométrie de la section transversale des pores tubulaires tronconiques peut être sensiblement constante, quelle que soit la section transversale considérée. Par exemple un pore peut présenter une section transversale de forme générale hexagonale convexe, quel que soit le plan de coupe transversal considéré, l'aire de cette section étant variable.

De préférence, au moins 70%, de préférence au moins 80%, de préférence au moins 90% en nombre des pores sont des pores tubulaires tronconiques débouchant par leurs deux extrémités par des ouvertures large et étroite, respectivement. Ces pores sont appelés « pores traversant ». Il est ainsi plus facile de les imprégner, notamment d'un catalyseur. En cas d'utilisation comme support de catalyseur, les réactions de catalyse en sont également améliorées.

De préférence encore, le rapport du diamètre équivalent moyen (en moyenne sur l'ensemble desdits pores tubulaires tronconiques traversant) des ouvertures étroites sur le diamètre équivalent moyen (en moyenne sur l'ensemble desdits pores tubulaires tronconiques traversant) des ouvertures larges étant inférieur à 0,99, de préférence inférieur à 0,95, voire inférieur à 0,90, voire inférieur à 0,85, voire inférieur à 0,80, voire inférieur à 0,75.

Parois

De préférence plus de 40%, plus de 70%, plus de 90%, voire sensiblement 100% du volume de parois d'un produit selon l'invention présente une structure sensiblement identique, en particulier présentant une ou plusieurs des caractéristiques décrites ci-après.

De préférence, une paroi entre lesdits pores tubulaires tronconiques comporte plus de 10%, de préférence plus de 20%, de préférence plus de 30%, de préférence plus de 50%, de préférence plus de 70%, de préférence plus de 80%, de préférence plus de 90% de grains céramiques orientables, de préférence anisotropes. Dans un mode de réalisation, la paroi est constituée pour sensiblement sa totalité de grains céramiques orientables, voire anisotropes.

Dans un mode de réalisation, les grains céramiques orientables, voire les grains céramiques anisotropes, voire les grains céramiques, ne sont pas recouverts, même partiellement, par un revêtement magnétique.

De préférence, plus de 50%, voire plus de 60%, voire plus de 70%, voire plus de 80%, voire plus de 90 %, voire plus de 95%, voire même sensiblement 100% de la masse des parois est constituée de grains, de préférence céramiques.

Agencement des grains céramiques

Les grains céramiques orientables sont de préférence agencés de manière ordonnée. De préférence ils présentent une ou plusieurs orientations préférentielles, c'est-à-dire que leur orientation n'est pas aléatoire. En particulier, ils peuvent être empilés sous forme de couches, de préférence sensiblement parallèles à la surface extérieure de la paroi considérée à proximité de laquelle ils s'étendent.

Dans un mode de réalisation, la concentration de grains céramiques orientables agencés de manière ordonnée est plus élevée à la périphérie desdites parois (c'est-à-dire à proximité des surfaces extérieures des parois en contact avec les volumes intérieurs des pores tubulaires tronconiques) qu'au coeur desdites parois (à proximité de leurs plans médians).

Ces caractéristiques peuvent être mises en évidence par une analyse d'image d'une section transversale de la paroi considérée, ladite image présentant au moins 10 joints de grains, par exemple à l'aide du logiciel Fiji et du critère « *directionnality* ». L'orientation des grains céramiques selon l'invention conduit à un pic de plus forte intensité sur l'histogramme réalisé par le logiciel (fournissant la quantité de joints de grains en fonction de la direction (en degré)). Ce pic peut être approximé par une gaussienne, la « dispersion » étant égale à deux fois l'écart type de cette gaussienne.

De préférence, selon l'invention, la dispersion (valeur également nommée « dispersion » dans le logiciel) est inférieure à 30°, de préférence inférieure à 20°, de préférence inférieure à 15°.

L'histogramme réalisé par le logiciel peut comporter plusieurs pics.

De préférence, la surface couverte par les joints de grains correspondant au pic de plus forte intensité, en pourcentage de la surface analysée par le logiciel (valeur nommée « *Amount* » dans le logiciel) est supérieure à 2%, de préférence supérieure à 5%, voire supérieure à 10%, voire supérieure à 20%, voire supérieure à 40%, voire supérieure à 50%, voire supérieure à 60%, voire supérieure à 70%, voire même supérieure à 80%.

Dans un mode de réalisation, la paroi considérée comporte une strate périphérique, c'est-à-dire définissant, au moins en partie, la surface extérieure de la paroi, cette strate étant constituée par une couche de grains céramiques orientables, de préférence anisotropes, ou par un empilement d'au moins 2 couches de grains céramiques orientables, de préférence anisotropes, de préférence 2 à 20, voire de 2 à 10, voire de 2 à 8, voire de 2 à 7, couches de grains céramiques orientables, de préférence anisotropes, une « couche de grains » étant constituée d'une pluralité de grains adjacents non superposés.

Dans un mode de réalisation, la paroi considérée comporte deux strates périphériques définissant chacune, au moins en partie, une surface extérieure de la paroi, ces strates étant chacune constituée par un couche de grains céramiques orientables, de préférence anisotropes, ou par un empilement d'au moins 2 couches de grains céramiques orientables, de préférence anisotropes, de préférence de 2 à 20, voire de 2 à 10, voire de 2 à 8, voire de 2 à 7, couches de grains céramiques orientables, de préférence anisotropes.

Dans un mode de réalisation, la paroi considérée comporte une strate centrale, s'étendant entre les deux dites strates périphériques, et constituée d'un ensemble de grains dont l'agencement n'est pas ordonné.

Dans un mode de réalisation, les grains céramiques sont des grains de nitrure de bore et la paroi considérée comporte une strate périphérique, c'est-à-dire définissant, au moins en partie, la surface extérieure de la paroi, cette strate étant constituée par un couche de grains céramiques orientables, de préférence anisotropes, ou par un empilement de 2 à 10, de préférence de 2 à 8, de préférence de 2 à 7, couches de grains de nitrure de bore orientables, de préférence anisotropes.

L'épaisseur de la strate centrale peut représenter moins de 30%, moins de 10%, moins de 5% de l'épaisseur de la paroi. La paroi peut également ne pas comporter de strate centrale.

La figure 3 représente schématiquement une coupe transversale d'une paroi 10 illustrant une telle structure. La paroi 10, d'épaisseur « e », comporte deux surfaces extérieures 12a et 12b définissant les volumes intérieurs de deux pores tubulaires tronconiques 14a et 14b, respectivement.

Les grains 16 constituant la paroi 10 sont des plaquettes qui forment deux strates périphériques 18a et 18b, définissant les deux surfaces extérieures 12a et 12b, respectivement, et une strate centrale 18c.

Chacune des deux strates périphériques 18a et 18b est constituée d'une pluralité de couches 20 de grains sensiblement parallèles, en l'occurrence sept couches. Dans ces couches, les grains sont disposés à plat. Le plan des couches est sensiblement parallèle à la direction de déplacement du front de solidification D.

Dans la strate centrale 18c, les particules ne sont pas orientées de manière préférentielle.

En suivant un procédé selon l'invention, il est possible de modifier l'épaisseur e, et donc de modifier la microstructure de la paroi, en modifiant la vitesse du front de solidification Vp. En particulier lorsque les particules sont des plaquettes, par exemple du type de celles utilisées pour les exemples, les inventeurs ont constaté que la quantité de plaquettes pouvant prendre une orientation privilégiée sous l'effet du passage du front de solidification est limitée. En particulier, l'épaisseur de chaque strate périphérique ne dépasse pas environ 8 couches de plaquettes de nitrure de bore. Ainsi, si l'épaisseur e est inférieure à l'épaisseur de 16 plaquettes, sensiblement toutes les plaquettes s'orientent dans des plans sensiblement parallèles à la direction de déplacement du front de solidification et s'empilent sous forme de couches. Si l'épaisseur e est supérieure à l'épaisseur de 16 plaquettes, une strate centrale, dans laquelle les plaquettes ne sont plus orientées, apparaît. Augmenter ou réduire l'épaisseur de paroi permet ainsi d'augmenter ou de réduire le pourcentage de l'épaisseur de la paroi constituée par des plaquettes de nitrure de bore orientés.

Dans un mode de réalisation, la paroi ne comporte pas de strate centrale et sensiblement tous les grains céramiques orientables, de préférence anisotropes sont agencés de manière ordonnée. De préférence ladite paroi est composée de plus de 20 couches, voire de plus de 30 couches de grains céramiques orientables, de préférence anisotropes.

L'épaisseur « e » de la paroi et les grains céramiques orientables sont de préférence tels que $e < 25.L_{50}$, de préférence $e < 20.L_{50}$, de préférence $e < 16.L_{50}$, de préférence $e \leq 15.L_{50}$.

Dans un mode de réalisation, la paroi comporte une strate unique constituée par une couche de grains céramiques orientables, de préférence anisotropes, ou par un empilement d'au moins 2 couches de grains céramiques orientables, de préférence anisotropes, de préférence de 2 à 10, voire de 2 à 20, voire de 2 à 50 couches de grains céramiques orientables, de préférence anisotropes.

De préférence au moins 70 %, de préférence au moins 80%, de préférence au moins 90 %, de préférence au moins 95%, de préférence substantiellement 100% en nombre des grains de ladite strate unique sont sensiblement parallèles les uns aux autres et sensiblement parallèles à la surface externe de ladite paroi.

De préférence, les grains céramiques orientables constituant la strate unique sont des plaquettes ou des bâtonnets.

De préférence, suivant la largeur d'une section transversale médiane d'un pore, le nombre de grains superposés (selon l'épaisseur) est sensiblement constant. De préférence, le nombre de grains superposés varie de plus ou moins 10% par rapport au nombre moyens de grains superposés.

De préférence, un pore tubulaire tronconique présente, lorsqu'observé dans une section transversale médiane, une section aplatie, et plus de 80% en nombre des grains d'une portion de paroi s'étendant entre deux pores adjacents aplatis, sont empilés à plat les uns sur les autres.

Un produit comportant de telles parois présente une réponse optimisée de la fonction orientée.

Dans une paroi située entre les pores tubulaires tronconiques d'un produit selon l'invention, de préférence plus de 10%, de préférence plus de 20%, de préférence plus de 30%, de préférence plus de 50%, de préférence plus de 70% de préférence plus de 80%, de préférence plus de 90% en nombre des grains sont des grains céramiques orientables, de préférence anisotropes.

Dans une paroi située entre les pores tubulaires tronconiques d'un produit selon l'invention, la fraction surfacique des grains céramiques orientables, mesurée sur une section transversale médiane, représente de préférence plus de 10%, de préférence plus de 20%, voire plus de 30% de l'aire totale de ladite paroi. Dans un mode de réalisation préféré, le complément à ladite fraction surfacique des grains céramiques orientables est la porosité.

Dans un mode de réalisation, les parois (c'est-à-dire la matière entre les pores tubulaires tronconiques) du produit selon l'invention sont poreuses (la porosité des parois étant typiquement supérieure ou égale à 10% en volume). La porosité ouverte des parois entre les pores tubulaires tronconiques est de préférence supérieure à 30%, voire supérieure à 40% et/ou inférieure à 90%, de préférence inférieure à 80%, de préférence inférieure à 70%, voire inférieure à 60%, voire inférieure à 50%. Avantageusement, les propriétés mécaniques en sont améliorées.

## Exemples

Les exemples hors invention sont référencés par (*).

Les produits des exemples ont été fabriqués suivant un procédé selon l'invention.

Les matières premières suivantes ont été utilisées :

- Poudre de plaquettes de nitrure de bore hexagonal Très BN PUHP 3016, commercialisée par la société Saint-Gobain, présentant une taille médiane égale à 16 $\mu$m et une surface spécifique égale à 2 m$^2$/g,
- Poudre de plaquettes de nitrure de bore hexagonal Très BN PUHP 500, commercialisée par la société Saint-Gobain, présentant une taille médiane égale à 6 $\mu$m et une surface spécifique égale à 7 m$^2$/g,
- Poudre d'alumine TM-DAR Taimicron commercialisée par la société Krahn Chemie Gmbh,
- Poudre de plaquettes d'alumine RonaFlair White Sapphire commercialisée par la société Merck,
- Solution colloïdale de silice Nexsil 20K commercialisée par la société NYACOL,
- Poudres de $K_2CO_3$, $Na_2CO_3$, $Nb_2O_5$, $Bi_2O_3$ commercialisées par la société Sigma-Aldrich,
- Poudre d'oxyde de cuivre (CuO) commercialisée par Sigma-Aldrich,
- Poudre de nitrate de calcium commercialisée par la société Sigma-Aldrich,
- Polyéhtylène glycol PEG20M commercialisée par la société Merck,
- Solution de Darvan 811 commercialisée par la société Vanderbilt,
- Poudre de Darvan 7NS commercialisée par la société VanderBilt,
- Poudre de Tylose H4000P2 commercialisée par Shin-Etsu,
- Solution de polyéthylène glycol 4000, ou PEG4000, avec un taux de matière active égal à 32%,
- Poudre de sucrose commercialisé par Sigma-Aldrich,
- Poudre de NaCl commercialisé par Sigma-Aldrich,
- Acétate de zirconium, dilué à 22% en masse dans de l'acide acétique commercialisé par la société Saint-Gobain.

Les méthodes de caractérisation suivantes ont été utilisées :

**La mesure du diamètre équivalent moyen des sections transversales des pores** est déterminée par la méthode suivante :

L'échantillon à analyser est infiltré avec une résine, par exemple une résine époxy. Une coupe est effectuée, à mi-longueur des pores tubulaires tronconiques, perpendiculairement à la direction de solidification, puis polie afin d'obtenir un bon état de surface, ledit polissage s'effectuant au minimum avec un papier grade 1200, de préférence avec une pâte diamantée. Des clichés sont réalisés à l'aide d'un microscope électronique à balayage (MEB), de préférence dans un mode utilisant les électrons rétrodiffusés (mode BSE) afin d'obtenir un très bon contraste entre la phase céramique et la résine. Chaque cliché présente au minimum 1280x960 pixels, sans la barre d'échelle. Le grandissement utilisé est tel que la largeur de l'image soit comprise entre 50 fois et 100 fois la taille moyenne des pores. Un premier cliché peut être réalisé grâce à une estimation visuelle de la taille moyenne des pores.

La taille moyenne des pores est déterminée par analyse de ces clichés selon la méthode d'érosion/dilatation décrite dans « Characterization of the morphology of cellular ceramics by 3D image processing of X-ray tomography », Maire et Al., J. Eur. Ceram. Soc., 27[4] 1973-1981 (2007).

**La mesure de l'épaisseur des parois,** e, d'un produit est déterminée par la méthode suivante. Si le produit est un produit non fritté, un échantillon dudit produit est cassé dans une direction perpendiculaire à la direction de la longueur des pores tubulaires tronconiques. Au moins une partie de l'échantillon doit présenter une surface non modifiée par une action extérieure après rupture, afin d'éviter une modification de l'orientation des grains. Si le produit est un produit fritté, alors une tranche dudit produit à analyser est découpée perpendiculairement à la direction de la longueur des pores tubulaires tronconiques. Des clichés sont réalisés à l'aide d'un Microscope Electronique à Balayage (MEB). Chaque cliché présente au minimum 1280x960 pixels, sans la barre d'échelle. Le grandissement est tel que la largeur de l'image permette de visualiser entre 2 et 50 pores.

L'épaisseur moyenne des parois est alors mesurée par analyse de ces clichés en utilisant le logiciel Fiji, en traçant des lignes délimitant latéralement les parois puis en utilisant l'outil «Analyse > Measure » dudit logiciel, la colonne « length » du tableau de résultat fournit l'épaisseur moyenne des parois. La correspondance entre pixel et unité de longueur peut être réalisée, au préalable en utilisant l'outil « Set Scale » et en mesurant le nombre de pixels de la barre d'échelle.

**Les mesures de l'épaisseur W1, de la longueur L ou D, et du facteur d'allongement R des particules, ainsi que de l'épaisseur moyenne W1$_{50}$ et du facteur d'allongement moyen Rm de la poudre de particules** sont déterminées par la méthode suivante. De la poudre de particules est mise en suspension dans de l'éthanol, de manière à bien les disperser. Cette suspension est ensuite étalée sur un support conducteur, comme du scotch carbone utilisé dans l'imagerie électronique. Au moins 5 clichés sont réalisés à l'aide d'un Microscope Electronique à Balayage (MEB), chaque cliché présentant au minimum 1280x960 pixels, sans la barre d'échelle. Le grandissement est tel que la largeur de l'image permette de visualiser entre 2 et 20 particules individuelles, c'est-à-dire non agglomérées. Si ce n'est pas le cas, il est nécessaire de recommencer avec une suspension présentant un rapport volume de particules sur volume d'éthanol plus faible. Le cliché doit présenter des particules dont l'épaisseur apparait comme sensiblement parallèle au plan de visualisation.

L'épaisseur des particules, W1 est alors mesurée par analyse desdits clichés en utilisant le logiciel Fiji, en traçant des lignes délimitant les particules puis en utilisant l'outil «Analyse > Measure » dudit logiciel. La colonne « length » du tableau de résultat fournit l'épaisseur moyenne des parois. La correspondance entre pixel et unité de longueur peut être réalisée au préalable en utilisant l'outil « Set Scale » et en mesurant le nombre de pixels de la barre d'échelle. L'épaisseur moyenne des particules de la poudre, W1$_{50}$ est la moyenne des épaisseurs W1 mesurées.

La longueur de chaque particule est également mesurée. Le facteur d'allongement, R, égal à la longueur de la particule divisée par la largeur de ladite particule, est calculé, ainsi que le facteur d'allongement moyen, Rm, de la poudre de particules, égal à la moyenne arithmétique des facteurs d'allongement R.

**La mesure de l'alignement des grains dans les parois d'un produit** est déterminée par la méthode suivante. Si le produit est un produit non fritté, un échantillon dudit produit est cassé dans une direction perpendiculaire à la direction de la longueur des pores tubulaires tronconiques. Au moins une partie de l'échantillon doit présenter une surface non modifiée par une action extérieure après rupture, afin d'éviter une modification de l'orientation des grains. Si le produit est un produit fritté, alors une tranche du dit produit à analyser est découpée perpendiculairement à la direction de la longueur des pores tubulaires tronconiques, et subit ensuite une attaque thermique visant à révéler les joints de grains. Des clichés sont réalisés à l'aide d'un Microscope Electronique à Balayage (MEB). Chaque cliché présente au minimum 1280x960 pixels, sans la barre d'échelle. Le grandissement est tel que la hauteur de l'image soit égale à la taille d'une paroi d'épaisseur e. L'orientation des grains est alors mesurée grâce à l'outil « Analyse > Directionality » du logiciel Fiji, en sélectionnant la méthode de mesure « Local Gradient Orientation », « Nbins » égal à 90 et « Histogram Start » égal à -90°. Les deux grandeurs de cette caractérisation sont la « Dispersion » qui quantifie la dispersion angulaire de l'alignement dans l'image et la grandeur « amount » qui quantifie la fraction de l'image présentant un alignement préférentiel.

**La masse volumique absolue** du matériau composant le produit, est le rapport égal à la masse de matière sèche dudit matériau après un broyage à une finesse telle qu'il ne demeure sensiblement aucun pore fermé, divisée par le volume de cette masse après broyage. Elle peut être mesurée par pycnométrie à hélium.

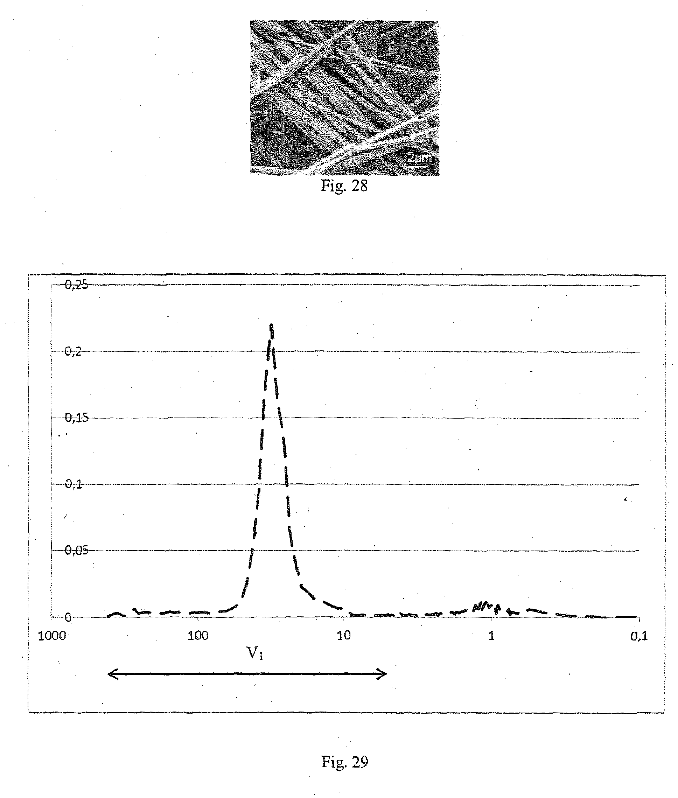

**La mesure de la porosité ouverte dans les parois** est déterminée par porosimétrie au mercure. Un échantillon fritté de masse et de masse volumique absolue connues est introduit dans un pénétromètre adapté à la taille et au volume de la porosité à mesurer. La pression minimale à appliquer au mercure est ajustée afin de pouvoir faire rentrer le mercure dans des pores de tailles au moins quinze fois inférieures à la longueur médiane des grains de l'échantillon. Comme représenté sur la figure 29, dans laquelle l'axe des abscisses représente le diamètre des pores en microns et l'axe des ordonnées représente le volume de mercure introduit en mL/g, on obtient un pic principal correspondant à la macroporosité tubulaire tronconique et d'autres pics dont la somme correspond au volume des pores ouverts dans les parois. Le volume de mercure utilisé pour remplir la porosité ouverte dans les parois est calculé par la formule suivante :

Volume de mercure dans la porosité ouverte des parois = Volume total de mercure introduit – Volume de mercure $V_1$ introduit dans l'échantillon correspondant au pic principal.

Le pourcentage de porosité ouverte dans les parois de l'échantillon peut alors être calculé par la formule suivante :

100 x Volume de mercure dans la porosité ouverte des parois / [(Volume de mercure dans la porosité ouverte des parois + (Masse de l'échantillon / Masse volumique absolue de l'échantillon)].

La masse volumique apparente relative des parois est égale à (100 – porosité ouverte dans les parois).

Les produits des exemples 1, 2, et 3 sont des produits de nitrure de bore, fabriqués selon le procédé suivant.
A l'étape a), les mélanges indiqués dans le tableau 1 (en pourcentages volumiques sur le volume total de chacune des barbotines préparées) ont été agités dans un bécher à l'aide d'un agitateur magnétique pendant 5 heures.

Tableau 1

| Exemple | | 1 | 2 | 3 |
|---|---|---|---|---|
| | Très BN PUHP 3016 | 18,5 | | |
| Poudre céramique | Très BN PUHP 500 | | 18,6 | |
| | Très BN PUHP 3008 | | | 17,4 |
| Solution PEG 4000 | | 0,8 | 0,9 | 0,8 |
| Ethanol | | 2,7 | 2,7 | 2,1 |
| Tylose H 4000 P2 | | 0,8 | 0,8 | 0,8 |
| Eau dé ionisée | | 77,2 | 77,0 | 78,9 |
| % volumique de particules céramiques sur la base du volume de barbotine | | 18,5 | 18,6 | 17,4 |
| % de particules orientables, sur la base du volume de la poudre céramique | | Sensiblement 100 | Sensiblement 100 | Sensiblement 100 |
| Longueur médiane $L'_{50}$ des particules céramiques orientables ($\mu$m) | | 16 | 6 | 8 |
| Facteur d'allongement moyen Rm de la poudre de particules orientables | | 16 | 24 | 16 |
| Epaisseur moyenne des particules céramiques orientables $W1_{50}$ ($\mu$m) | | 1 | 0,25 | 0,54 |

Puis, des ultrasons ont été appliqués à chaque barbotine obtenue, de la manière suivante : Le récipient contenant la suspension est posé dans une cuve remplie d'eau d'un appareil à ultrasons Digital Sonifier 250, commercialisé par la société Branson. L'intensité des ultrasons était réglée à 50% de l'intensité maximale, soit un réglage sur une puissance égale à 100 Watt. Les ultrasons ont été appliqués pendant 1,5 seconde, puis arrêtés pendant 1,5 seconde, ce cycle étant répété pendant 14 minutes, temps au bout duquel l'eau de la cuve a atteint une température égale à 30°C. L'énergie appliquée à la suspension était comprise entre 150 et 160 Wh/kg de suspension.
La suspension a ensuite été maintenue sous agitation à l'aide d'un agitateur magnétique pendant 12 heures.
A l'étape b), chaque barbotine a été coulée dans un moule dont le fond était en contact avec une plaque en cuivre refroidie par un liquide réfrigéré. La vitesse de refroidissement de la plaque en cuivre permet de régler la vitesse de déplacement du front de solidification Vp au sein de la suspension.

A l'étape c), pour les exemples 1 et 2, la barbotine a été congelée de manière orientée avec une vitesse de congélation égale à -1°C/min soit une vitesse de déplacement du front de solidification sensiblement égale à 15 $\mu$m/s, et pour l'exemple 3, la barbotine a été congelée à une vitesse de - 0,5°C/min, conduisant à une vitesse de déplacement du front de solidification sensiblement égale à 8 $\mu$m/s. Après démoulage à l'étape d), la sublimation à l'étape e) a été effectuée en plaçant le bloc de barbotine congelée dans un lyophilisateur pendant 48h à une pression de 0,42 mbar.

Les produits des exemples 1, 2, et 3 n'ont pas subi d'autres étapes.

Le produit d'alumine de l'exemple 4 a été réalisé de la manière suivante : les constituants figurant dans le tableau 2 ci-dessous ont été mélangés pendant 6 heures en broyeur à jarre de manière à former une barbotine :

Tableau 2

| Constituants | % volumiques en pourcentages du volume de la barbotine |
| --- | --- |
| | Exemple 4(*) |
| Première fraction particulaire : Poudre RonalFlair White Sapphire | 1,3 |
| Deuxième fraction particulaire : Poudre de TM-DAR | 11,9 |
| PEG 20M | 1,5 |
| Darvan 811 | 2,6 |
| Sucrose | 3,3 |
| Nexsil 20K | 0,6 |
| Nitrate de Calcium | 0,1 |
| Eau dé ionisée | 78,7 |
| % volumique de l'ensemble des particules céramiques, sur la base du volume de barbotine | 13,2 |
| % volumique représenté par la première fraction particulaire, sur la base du volume de la poudre céramique | 10 |
| Longueur médiane $L'_{50}$ de la première fraction particulaire ($\mu$m) | 9 |
| Facteur d'allongement moyen Rm de la première fraction particulaire | 18 |
| Epaisseur moyenne $W1_{50}$ de la première fraction particulaire ($\mu$m) | 0,5 |
| % volumique représenté par la deuxième fraction particulaire, sur la base du volume de la poudre céramique | 90 |
| Longueur médiane $D_{50}$ de la deuxième fraction particulaire ($\mu$m) | 0,1 |

Les étapes b) à e) de la réalisation du produit de l'exemple 4 sont identiques à celles de la préparation des produits des exemples 1, 2 et 3, excepté à l'étape c) où la barbotine a été congelée de manière orientée avec une vitesse de congélation égale à -1°C/min soit une vitesse de déplacement du front de solidification sensiblement égale à 15 $\mu$m/s.

Le produit de l'exemple 4 a ensuite subi une étape de frittage avec le cycle suivant :

Montée en température de 50°C/h jusqu'à 490°C, palier de 1h à 490°C, montée en température de 30°C/h jusqu'à 550°C, palier de 30 minutes à 550°C, montée en température de 300°C/h jusqu'à 1550°C, palier de 1h30 à 1550°C, descente en température à une vitesse de 300°C/h jusqu'à la température ambiante.

Après confection d'échantillons du produit de l'exemple 4, ces derniers ont subi une attaque thermique réalisée suivant le cycle suivant : montée en température de 300°C/h jusqu'à 1450°C, palier de 20 minutes à 1450°C, descente en température à une vitesse de 300°C/h jusqu'à la température ambiante.

Les résultats obtenus figurent dans le tableau 3 suivant :

Tableau 3

| Exemple | 1 | 2 | 3 | 4(*) |
|---|---|---|---|---|
| Epaisseur des parois, e ($\mu$m) | 21 | 28 | 29 | 7 |
| Amount (%) | 79 | 63 | 70 | 53 |
| Dispersion (°) | 20,92 | 19,91 | 23,38 | 11,29 |

Les produits des exemples 1 à 4 présentent une quantité remarquable de grains orientables orientés suivant une direction préférentielle.

Le produit de l'exemple 5 a été réalisé de la manière suivante.

Une poudre de KNN ($K_{0,5}Na_{0,5}NbO_3$) a été synthétisée à partir des précurseurs $K_2CO_3$, $Na_2CO_3$, $Nb_2O_5$ en mélangeant $K_2CO_3$, $Na_2CO_3$ et $Nb_2O_5$ en proportion molaire 1:1:2 dans de l'éthanol en broyeur en jarre pendant trois jours. La suspension obtenue a alors été séchée jusqu'à évaporation totale du solvant puis traitée thermiquement dans le cycle suivant : montée en température à 4°C/min jusqu'à 800°C, palier à 800°C pendant 6 heures, puis redescente à vitesse naturelle. La poudre obtenue se présente sous la forme de particules sensiblement sphériques de longueur médiane $D_{50}$ égale à 0,5 $\mu$m.

Une poudre de NN ($Na_{0,5}NbO_3$) a été synthétisée à partir des précurseurs $Na_2CO_3$, $Nb_2O_5$, $Bi_2O_3$ par la méthode de conversion topochimique microcristalline : les précurseurs $Na_2CO_3$, $Nb_2O_5$ et $Bi_2O_3$ ont été mélangés dans un ratio molaire 1,75:2,5:1,25, puis NaCl a été ajouté avec un ratio massique NaCl : mélange ($Na_2CO_3$, $Nb_2O_5$ et $Bi_2O_3$) égal à 2:1. Le tout a ensuite été mis dans de l'éthanol, puis broyé en jarre pendant 15h, et enfin mélangé pendant 3 heures en turbulat. Le mélange obtenu a ensuite été séché jusqu'à évaporation totale du solvant, puis traité thermiquement dans le cycle suivant : montée en température à 3°C/min jusqu'à 700°C, puis montée en température à 4°C/min jusqu'à 1125°C, palier à 1125°C pendant 6 heures, puis redescente en température à une vitesse égale à 1,8°C/min. La poudre de $Bi_{2,5}Na_{3,5}Nb_5O_{18}$ alors obtenue a ensuite été lavée plusieurs fois à l'eau chaude afin d'enlever le sel NaCl introduit précédemment. $Na_2CO_3$ en proportion molaire 1:0,75 par rapport à $Bi_{2,5}Na_{3,5}Nb_5O_{18}$ a été mélangé avec du sel NaCl avec un ratio massique sel : mélange ($Na_2CO_3$, $Bi_{2,5}Na_{3,5}Nb_5O_{18}$) égal à 1,5 :1. Le mélange obtenu a été mis dans de l'éthanol et broyé en jarre pendant 14 heures, puis les particules de $Bi_{2,5}Na_{3,5}Nb_5O_{18}$ ont été ajoutées dans la suspension, et le tout a été broyé dans un broyeur à jarre pendant 5 heures. Le mélange obtenu a ensuite été séché jusqu'à évaporation totale du solvant, puis traité thermiquement dans le cycle suivant : montée en température à 4°C/min jusqu'à 975°C, palier à 975°C pendant 6 heures, puis redescente à une vitesse égale à 1,8°C/min. La poudre obtenue a été lavée plusieurs fois à l'eau chaude afin d'enlever le NaCl introduit précédemment, puis a été lavée quatre fois à l'acide nitrique pour éliminer le bismuth résiduel. La poudre finale de $NaNbO_3$ se présente sous la forme d'une poudre de plaquettes dont la longueur médiane $L'_{50}$ est égale à 15 $\mu$m et l'épaisseur moyenne $W1_{50}$ est égale à 1,5 $\mu$m.

A l'étape a), les constituants figurant dans le tableau 4 ci-dessous ont ensuite été mélangés pendant 12 heures en broyeur à jarre sans la poudre de NN, puis 1h en broyeur à jarre avec la poudre de NN, de manière à former une barbotine :

Tableau 4

| Constituants | % volumiques en pourcentages du volume de la barbotine |
|---|---|
| | Exemple 5 |
| Deuxième fraction particulaire : Poudre de KNN | 12,69 |
| Première fraction particulaire : Poudre de NN | 1,44 |
| Poudre de CuO | 0,05 |
| Darvan 7NS | 0,16 |
| PEG 20M | 2,54 |
| Sucrose | 2,50 |
| Eau dé ionisée | 80,62 |
| % volumique de l'ensemble des particules céramiques, sur la base du volume de barbotine | 14,22 |

(suite)

| Constituants | % volumiques en pourcentages du volume de la barbotine |
|---|---|
| | Exemple 5 |
| % volumique représenté par la première fraction particulaire, sur la base du volume de la poudre céramique | 10 |
| Longueur médiane $L'_{50}$ de la première fraction particulaire ($\mu$m) | 15 |
| Facteur d'allongement moyen Rm de la première fraction particulaire | 10 |
| Epaisseur moyenne $W1_{50}$ de la première fraction particulaire ($\mu$m) | 1,5 |
| % volumique représenté par la deuxième fraction particulaire, sur la base du volume de la poudre céramique | 89,7 |
| Longueur médiane $D_{50}$ de la deuxième fraction particulaire ($\mu$m) | 0,5 |

A l'étape b), la barbotine a été coulée dans un moule dont le fond était en contact avec une plaque en cuivre refroidie par un liquide réfrigéré. La vitesse de refroidissement de la plaque en cuivre permet de régler la vitesse de déplacement du front de solidification Vp au sein de la suspension.

A l'étape c), la barbotine a été congelée de manière orientée avec une vitesse de congélation égale à -1°C/min, soit une vitesse de déplacement du front de solidification sensiblement égale à 15 $\mu$m/s.

Après démoulage à l'étape d), la sublimation à l'étape e) a été effectuée en plaçant le bloc de barbotine congelée dans un lyophilisateur pendant 48h à une pression de 0,42 mbar.

La préforme macroporeuse obtenue a ensuite été placée dans un creuset en alumine fermé, posé sur un lit de poudre de KNN et a ensuite subi une étape de frittage avec le cycle suivant : montée en température à une vitesse égale à 50°C/h jusqu'à 550°C, palier de 1 heure à 550°C, montée en température à une vitesse égale à 4°C/h jusqu'à 1115°C, palier de 4 heures à 1115°C, montée en température à une vitesse égale à 1°C/h jusqu'à 1125°C, palier de 3 heures à 1125°C, descente en température à une vitesse égale à 300°C/h jusqu'à la température ambiante.

Le produit de l'exemple 5 obtenu est un produit de $K_{0,4}Na_{0,6}NbO_3$ macroporeux, présentant des parois constituées de grains sensiblement cubiques.

Le produit selon l'exemple 3 a ensuite été imprégné par une résine silicone TSE3033 par un procédé d'imprégnation sous vide. La résine ainsi que l'échantillon ont été placés à l'intérieur d'un moule polymère puis ensuite mis sous un vide de 0,11 bar pendant 10 minutes. Le vide a été cassé puis remis pendant une période de 20 minutes. Le corps ainsi imprégné de résine a été chauffé dans une étuve à 110°C pendant 2h afin de terminer la réticulation de la silicone.

Le produit de l'exemple comparatif imprégné a été fabriqué en mélangeant 18% en volume de poudre Très BN PUHP 3008 dans la résine utilisée pour imprégner le produit selon l'exemple 3. Les étapes ultérieures du procédé de fabrication de l'exemple comparatif étaient identiques à celles du produit de l'exemple 3 imprégné, mais sans étape de congélation, ni donc d'étape d'élimination de cristaux. La quantité de particules de nitrure de bore utilisées dans l'exemple comparatif est supérieure au seuil de percolation. Ces particules forment donc un réseau continu de particules noyées dans la résine utilisée.

Une mesure de diffusivité thermique par méthode flash a ensuite été réalisée sur chacun des deux produits décrits ci-dessus. Le tableau 5 suivant présente les résultats obtenus :

Tableau 5

| Exemple | Produit de l'exemple comparatif | Produit de l'exemple 3 imprégné |
|---|---|---|
| Diffusivité thermique à 20°C (mm$^2$/s) | 0,35 | 1,03 |

Le produit de l'exemple 3 imprégné, selon l'invention, présente une diffusivité thermique plus de 3 fois plus élevée que celle du produit de l'exemple comparatif, dans lequel les particules sont orientées de manière aléatoire.

Comme cela apparaît clairement à présent, le procédé selon l'invention permet d'obtenir des produits poreux à macropores tubulaires tronconiques dont les parois présentent une orientation de fonction remarquable.

Avantageusement, la porosité ouverte de paroi peut être également particulièrement faible.

Bien entendu, l'invention n'est pas limitée aux modes de réalisation fournis à titre d'exemples. En particulier, plusieurs poudres céramiques différentes pourraient être mélangées dans la barbotine à l'étape a).

**Revendications**

1. Procédé de fabrication d'un produit éventuellement fritté, ledit procédé comportant les étapes suivantes :

   a) préparation d'une barbotine comportant un ensemble de particules céramiques en suspension dans une phase liquide, l'ensemble de particules céramiques représentant plus de 4% et moins de 50% du volume de la barbotine et comportant, en pourcentage volumique sur la base de l'ensemble des particules céramiques, plus de 1% de particules céramiques orientables en un matériau à fonction orientée, un matériau à fonction orientée présentant au moins une propriété, autre que mécanique, orientée, c'est-à-dire dont l'intensité est variable selon l'orientation de la mesure, dans une proportion telle qu'il existe au moins une direction selon laquelle ladite propriété est au moins 1,1 fois supérieure, à la valeur moyenne de ladite propriété selon les autres directions, la fraction des particules céramiques non orientables présentant une longueur médiane inférieure à dix fois la longueur médiane des particules céramiques orientables $L_{50}$ si l'ensemble de particules céramiques comporte moins de 80%, en pourcentage volumique, de particules céramiques orientables,
   b) optionnellement, coulage de la barbotine dans un moule et/ou élimination de bulles d'air contenues dans la barbotine,
   c) congélation orientée de la barbotine par déplacement d'un front de solidification de manière à former un bloc de barbotine congelée, la vitesse Vp du front de solidification étant inférieure à la vitesse d'encapsulation des particules céramiques Vc et adaptée de manière à former des cristaux de phase liquide solidifiée séparés par des parois d'une épaisseur moyenne « e » supérieure ou égale à l'épaisseur moyenne des particules céramiques orientables $W1_{50}$, une particule orientable s'orientant d'une manière particulière sous l'effet du passage du front de solidification ;
   d) optionnellement, démoulage dudit bloc,
   e) élimination des cristaux de phase liquide solidifiée dudit bloc, éventuellement démoulé, de préférence par sublimation, de manière à obtenir une préforme macroporeuse, un macropore, également appelé pore tubulaire tronconique macroscopique, présentant une section transversale médiane présentant un diamètre équivalent supérieur à 0,15 $\mu$m et inférieur à 450 $\mu$m,
   f) optionnellement, déliantage de la préforme macroporeuse obtenue en fin d'étape e),
   g) optionnellement, frittage de la préforme macroporeuse de manière à obtenir un produit fritté, cette étape g) étant obligatoire si, à l'étape a), la quantité de particules céramiques orientables en un matériau à fonction orientée est inférieure à 80% en pourcentage volumique sur la base de l'ensemble des particules céramiques ;
   h) optionnellement, usinage et/ou imprégnation dudit produit fritté ;

   les particules céramiques pouvant être remplacées, partiellement ou totalement, par des quantités équivalentes de précurseurs se transformant en particules céramiques de manière à obtenir avant l'étape c) ledit ensemble de particules céramiques, et/ou
   les particules céramiques pouvant être remplacées, partiellement ou totalement, par des quantités équivalentes de particules de même forme en un précurseur de céramique se transformant en céramique à l'étape f) ou g),
   la forme des particules orientables étant déterminée de manière que l'orientation des particules orientables sous l'effet de la congélation à l'étape c) conduise, dans la préforme macroporeuse, à une intensité de ladite fonction variable selon la direction considérée.

2. Procédé selon la revendication précédente, dans lequel le matériau à fonction orientée est choisi dans le groupe formé par le nitrure de bore hexagonal, le graphite, le graphène, le PMN PT, ou $(1-x)[Pb(Mg_{1/3}Nb_{2/3})O_3]-x[PbTiO_3]$, avec x compris entre 0 et 1, $PbTiO_3$, $(Li,Na,K)(Nb,Ta,Sb)O_3$, en particulier le niobiate de sodium et de potassium, et l'hématite.

3. Procédé selon l'une quelconque des revendications précédentes, dans lequel on détermine une direction, puis on choisit la forme des particules orientables en fonction de l'orientation de la fonction, de manière que la congélation orientée permette d'obtenir des propriétés dont l'intensité est variable selon ladite direction.

4. Procédé selon l'une quelconque des revendications précédentes, dans lequel l'ensemble de particules céramiques comporte, en pourcentage volumique sur la base de l'ensemble des particules céramiques,

   - une première fraction particulaire constituée de particules orientables, de préférence anisotropes, en un matériau à fonction orientée, présentant une longueur médiane $L'_{50}$ et représentant plus de 1% des particules céramiques, en pourcentage volumique sur la base de l'ensemble des particules céramiques ; et
   - une deuxième fraction particulaire présentant une longueur médiane $D_{50}$ au moins dix fois inférieure à $L'_{50}$ et

représentant plus de 5% des particules céramiques, en pourcentage volumique sur la base de l'ensemble des particules céramiques ;

les première et deuxième fractions particulaires représentant ensemble, plus de 80% de l'ensemble des particules céramiques, en pourcentage volumique.

5.  Procédé selon la revendication précédente, dans lequel

    - la première fraction particulaire représente plus de 5% et moins de 15% du volume des particules céramiques, et
    - les particules de la première fraction particulaire sont en un matériau à fonction orientée, et
    - les première et deuxième fractions particulaires représentent ensemble plus de 95% du volume de l'ensemble des particules céramiques, et
    - la distribution granulométrique des particules céramiques est bimodale, les deux modes principaux correspondant aux première et deuxième fractions particulaires, respectivement,

    le procédé comportant une étape de frittage g).

6.  Procédé selon la revendication 4, dans lequel

    - la première fraction particulaire représente plus de 90% du volume des particules céramiques, et
    - les particules de la première fraction particulaire sont en un matériau à fonction orientée, et
    - les première et deuxième fractions particulaires représentent ensemble plus de 95% du volume de l'ensemble des particules céramiques, et
    - la distribution granulométrique des particules céramiques est bimodale, les deux modes principaux correspondant aux première et deuxième fractions particulaires, respectivement,

    le procédé comportant de préférence une étape de frittage g).

7.  Procédé selon l'une quelconque des revendications précédentes, dans lequel la fonction orientée correspond à une propriété thermique, électrique, piézoélectrique ou magnétique.

8.  Procédé selon l'une quelconque des revendications précédentes, dans lequel les particules céramiques orientables sont des plaquettes de nitrure de bore, chaque plaquette présentant une conductivité thermique dans le plan principal de la plaquette supérieure à la conductivité thermique selon l'épaisseur de la plaquette.

9.  Procédé selon l'une quelconque des revendications précédentes, dans lequel les particules céramiques orientables sont des particules anisotropes ou des particules multi-facettées présentant plus de deux facettes.

10. Procédé selon l'une quelconque des revendications 2 à 9, dans lequel le matériau constituant les particules céramiques orientables, voire anisotropes, et/ou les particules céramiques de la deuxième fraction particulaire et/ou les particules de la fraction complémentaire aux particules orientables ou aux particules anisotropes est choisi dans le groupe formé par l'oxyde de zirconium ou zircone ($ZrO_2$), l'oxyde de zirconium partiellement stabilisé, l'oxyde de zirconium stabilisé, l'oxyde d'yttrium ($Y_2O_3$), l'oxyde d'yttrium dopé, de préférence l'oxyde d'yttrium dopé à l'oxyde de samarium, l'oxyde de titane ($TiO_2$), les aluminosilicates comme la mullite, la cordiérite ($Al_3Mg_2AlSi_5O_{18}$), l'oxyde d'aluminium ou alumine ($Al_2O_3$), les alumines hydratées, et en particulier la boehmite, l'oxyde de magnésium (MgO), le talc ($Mg_3Si_4O_{10}(OH)_2$), l'oxyde de nickel (NiO), les oxydes de fer (FeO, $Fe_2O_3$, $Fe_3O_4$), l'oxyde de cérium, l'oxyde de cérium dopé, les oxydes de structure pérovskite, en particulier les gallates, les composés comportant du lanthane du type $LaAlO_3$ ou $LaGaO_3$ ou $La_{(1-x)}Sr_xMO_3$, avec $0 \le x \le 1$ et M un élément choisi dans le groupe formé du chrome, du cobalt, du magnésium, du fer, du gadolinium, du manganèse et de leurs mélanges ; les oxydes de structure pérovskite dopés avec du platine et/ou du palladium et/ou du rhodium et/ou de l'or et/ou de l'argent, par exemple $La_{(1-x)}Sr_xM_{(1-y)}M'_yO_3$ avec $0 \le x \le 1$, $0 \le y \le 0,15$, M étant un élément choisi dans le groupe formé du chrome, du cobalt, du magnésium, du fer, du gadolinium, du manganèse et de leurs mélanges, M' étant un élément choisi dans le groupe formé du platine, du palladium, du rhodium, de l'or, de l'argent et leurs mélanges, les composés comportant du titane du type $La_4Sr_8Ti_{11}Mn_{1-x}Ga_xO_{38}$ avec $0 \le x \le 1$ et $La_4Sr_8Ti_{12-n}Mn_nO_{38}$ avec $0 \le n \le 1$, les composés du type $BaTiO_3$, $BaZrO_3$, $Pb(Mg_{0,25}Nb_{0,75})O_3$, $Ba(Zn_{0,25}Nb_{0,75})O_3$, $Pb(Zn_{0,25}Nb_{0,75})O_3$, $PbTiO_3$, $CaCu_3Ti_4O_{12}$, les composés de structure du type bimevox, par exemple $Bi_2V_{1-x}Me_xO_z$ avec $0 \le x \le 1$, z permettant d'assurer l'électroneutralité, et Me un élément choisi dans le groupe formé du magnésium, de l'aluminium, du silicium, du titane, du cobalt, du nickel, du cuivre, du zinc, du manganèse, de l'antimoine, du tantale, du niobium, du chrome, du molybdène, du tungstène, de l'uranium et de leurs mélanges, les composés de structure du type lamox, par exemple $La_2Mo_2O_9$, les composés de structure apatite, par exemple $Me'_{10}(XO_4)_6Y'_2$ dans lequel Me' est un cation métallique choisi dans le groupe formé de $Ca^{2+}$, de $Cd^{2+}$, de $Sr^{2+}$, de $Ba^{2+}$, de $Pb^{2+}$, de $Na^+$, de $K^+$, des cations de terres rares, de préférence $La^{3+}$ et $Nd^{3+}$, de $Al^{3+}$, de $U^{4+}$, de $Th^{4+}$, $(XO_4)$ est un groupement anionique choisi parmi $PO_4^{3-}$, $SiO_4^{4-}$, $AsO_4^{3-}$, $MnO_4^-$, $SO_4^{2-}$, $CO_3^{2-}$, $HPO_4^{2-}$, $SiO_4^{4-}$, $GeO_4^{4-}$ et leurs mélanges, et Y' est un anion choisi parmi $F^-$, $Cl^-$, $OH^-$, $Br^-$, $I^-$, $CO_3^{2-}$, $O^{2-}$ et leurs mélanges, les composés de type $SrCe_{1-x}M_xO_3$ avec $0 \leq x \leq 1$ et M une terre rare, M étant de préférence l'ytterbium, les composés du type $BaCe_{1-x}M_xO_3$, avec $0 \leq x \leq 1$ et M une terre rare, par exemple le composé $BaCeO_3$, les composés de la famille $La_xSr_{1-x}ScO_3$ avec $0 \leq x \leq 1$, par exemple $La_{0,9}Sr_{0,1}ScO_3$, les zéolithes de structure $Na_{x1}Ca_{x2}Mg_{x3}Ba_{x4}K_{x5}Al_{x6}(Si_{x7}O_{x8}),x9H_2O$, $x1$ à $x9$ étant des entiers positifs ou nuls respectant les conditions suivantes : $x6 > 0$, $x7 > 0$, $x8 > 0$, $x9 > 0$ et $x1 + x2 + x3 + x4 + x5 > 0$, $KNbO_3$ éventuellement dopé de préférence avec du lithium et/ou du tantale et/ou du baryum, $NaNbO_3$ éventuellement dopé de préférence avec du lithium et/ou du tantale et/ou du baryum, $(K_{0,5}Na_{0,5})NbO_3$ éventuellement dopé de préférence avec du lithium et/ou du tantale et/ou du baryum, le nitrure d'aluminium, le nitrure de bore, le nitrure de silicium, le nitrure de titane, le carbure de titane, le carbure de silicium, le carbure de tungstène, le carbure de zirconium, et leurs mélanges.

**11.** Procédé selon l'une quelconque des revendications précédentes, dans lequel, à l'étape c), les conditions de congélation orientées sont adaptées pour former des cristaux de phase liquide solidifiée, présentant dans un plan transversal médian, une largeur plus de 5 fois, de préférence plus de 10 fois, voire plus de 20 fois supérieure à l'épaisseur du cristal de phase liquide solidifiée, ledit procédé comportant une étape e'), de préférence successive à l'étape e), consistant à comprimer le bloc selon une direction sensiblement parallèle à la direction de l'épaisseur des cristaux de phase liquide solidifiée, de manière à obtenir un bloc présentant une masse volumique relative supérieure à 85%.

**12.** Produit, éventuellement fritté, fabriqué suivant un procédé conforme à l'une quelconque des revendications précédentes, le produit comportant une pluralité de pores tubulaires tronconiques macroscopiques s'étendant sensiblement parallèlement les uns aux autres suivant une direction longitudinale, chaque pore tubulaire tronconique étant délimité par une paroi comportant plus de 50% en nombre de grains céramiques orientables, les parois entre lesdits pores tubulaires tronconiques comportant plus de 5%, en pourcentage volumique, de grains céramiques orientables et présentant une fonction orientée, les grains céramiques orientables présentant une ou plusieurs orientations préférentielles.

**13.** Produit selon la revendication immédiatement précédente, dans lequel la dispersion de l'orientation des joints de grains est inférieure à 30°.

**14.** Produit selon l'une quelconque des revendications 12 et 13, dans lequel un pore tubulaire tronconique présente, lorsqu'observé dans une section transversale, une section aplatie, et plus de 80% en nombre des grains d'une portion de paroi s'étendant entre deux pores adjacents aplatis, sont empilés à plat les uns sur les autres.

**15.** Produit dense, éventuellement fritté, présentant une masse volumique relative supérieure à 85%, comportant en pourcentage volumique plus de 50% de grains céramiques orientables, et comportant plus de 5%, en pourcentage volumique, de grains céramiques orientables et présentant une fonction orientée, plus de 80% de grains céramiques orientables étant sensiblement parallèles les uns aux autres, le produit étant obtenu ou susceptible d'avoir été obtenu par un procédé selon l'une quelconque des revendications 1 à 8 et 11, dans lequel l'ensemble des particules céramiques comporte plus de 10%, en volume des particules céramiques, de particules céramiques orientables en un matériau à fonction orientée, les particules céramiques orientables étant des particules anisotropes, une particule anisotrope présentant un facteur d'allongement R entre sa longueur L et son épaisseur W1, soit $R = L/W1$, supérieur à 4, le procédé comportant en outre une étape e') de compression, de préférence successive à l'étape e), consistant à comprimer ledit bloc selon une direction sensiblement parallèle à la direction de l'épaisseur des cristaux de phase liquide solidifiée.

**16.** Dispositif choisi parmi une cellule électrochimique céramique, une pile à combustible, et en particulier une pile SOFC, une pile IT-SOFC, une pile PCFC, un élément de filtration d'un fluide liquide ou gazeux, une microstructure de stockage utilisée pour stocker, dans les macropores, une substance, un support de catalyseur, un échangeur thermique, un isolant thermique, un distributeur de fluide permettant de véhiculer ledit fluide, et notamment un distributeur de gaz, un séparateur de gouttes ou un bloc de ruissèlement pour une centrale de traitement de l'air, une batterie, et notamment un électrolyte d'une batterie, un supercondensateur, un adsorbeur d'humidité, une microchambre de combustion, un transducteur, un capteur de déplacement, une sonde échographique, un support de cuisson, un moufle de frittage, ledit dispositif comportant un produit selon l'une quelconque des revendications 12 à 15.

**Patentansprüche**

1. Verfahren zur Herstellung eines gegebenenfalls gesinterten Produkts, wobei das besagte Verfahren die folgenden Schritte umfasst:

   a) Herstellung eines Schlickers umfassend eine Gesamtheit von keramischen Partikeln in Suspension in einer flüssigen Phase, wobei die Gesamtheit von keramischen Partikeln mehr als 4% und weniger als 50% des Volumens des Schlickers darstellt und, in Volumenprozent basierend auf der Gesamtheit von keramischen Partikeln, mehr als 1% ausrichtbare keramische Partikel aus einem Material mit gerichteter Funktion umfasst, wobei ein Material mit gerichteter Funktion mindestens eine, nicht mechanische, gerichtete Eigenschaft aufweist, das heißt, dass dessen Intensität variabel ist je nach Ausrichtung der Messung, in einem Verhältnis so dass mindestens eine Richtung existiert, nach welcher die besagte Eigenschaft mindestens 1,1-fach größer ist als der Mittelwert der besagten Eigenschaft nach den anderen Richtungen,
   wobei die Fraktion der nicht-ausrichtbaren keramischen Partikel einen Median der Länge aufweist, der geringer als das Zehnfache des Medians der Länge der ausrichtbaren keramischen Partikel $L_{50}$ ist, wenn die Gesamtheit der keramischen Partikel weniger als 80%, in Volumenprozent, ausrichtbare keramische Partikel umfasst,
   b) optional Gießen des Schlickers in eine Form und/oder Entfernen von in dem Schlicker enthaltenen Luftblasen,
   c) gerichtetes Einfrieren des Schlickers durch Fortbewegen einer Erstarrungsfront um so einen Block gefrorenen Schlickers zu bilden, wobei die Geschwindigkeit Vp der Erstarrungsfront geringer ist als die Geschwindigkeit der Verkapselung der keramischen Partikel Vc und geeignet ist, um so Kristalle der erstarrten flüssigen Phase zu bilden, getrennt durch Wände einer durchschnittlichen Dicke "e" größer als oder gleich der durchschnittlichen Dicke der ausrichtbaren keramischen Partikeln $W1_{50}$, wobei ein ausrichtbarer Partikel sich unter dem Einfluss des Durchlaufs der Erstarrungsfront auf eine bestimmte Weise ausrichtet;
   d) optional Entnehmen des Blocks aus der Form,
   e) Entfernen der Kristalle der erstarrten flüssigen Phase aus besagtem, gegebenenfalls aus der Form entnommenen, Block, vorzugsweise durch Sublimation, um so eine makroporöse Vorform zu erhalten, wobei eine Makropore, auch tubulär kegelförmige makroskopische Pore genannt, einen mittleren Querschnitt aufweist, der einen Äquivalentdurchmesser von größer als 0,15 $\mu$m und geringer als 450 $\mu$m aufweist,
   f) optional Entbindern der am Ende des Schritts e) erhaltenen makroporösen Vorform,
   g) optional Sintern der makroporösen Vorform um so ein gesintertes Produkt zu erhalten, wobei dieser Schritt g) obligatorisch ist, wenn, in dem Schritt a), die Menge der ausrichtbaren keramischen Partikel aus einem Material mit gerichteter Funktion geringer als 80% ist in Volumenprozent basierend auf der Gesamtheit von keramischen Partikeln ;
   h) optional maschinelles Bearbeiten und/oder Imprägnieren des besagten gesinterten Produkts ;

   wobei die keramischen Partikel teilweise oder vollständig ersetzt werden können mit äquivalenten Mengen von Vorläufern, die sich in Keramik umwandeln um so vor dem Schritt c) die besagte Gesamtheit der keramischen Partikel zu erhalten, und/oder
   wobei die keramischen Partikel teilweise oder vollständig ersetzt werden können mit äquivalenten Mengen von Partikeln gleicher Form aus einem Keramikvorläufer, der sich im Schritt f) oder g) in Keramik umwandelt, und/oder
   wobei die Form der ausrichtbaren Partikel so bestimmt wird, dass die Ausrichtung der ausrichtbaren Partikel unter dem Einfluss des Einfrierens im Schritt c) in der makroporösen Vorform zu einer Intensität der besagten Funktion führt, die je nach berücksichtigter Richtung variabel ist.

2. Verfahren nach dem vorhergehenden Anspruch, wobei das Material mit gerichteter Funktion ausgewählt ist aus der Gruppe gebildet aus hexagonalem Bornitrid, Graphit, Graphen, PMN PT, oder $(1-x)[Pb(Mg_{1/3}Nb_{2/3})O_3]-x[PbTiO_3]$, mit x zwischen 0 und 1, $PbTiO_3$, $(Li,Na,K)(Nb,Ta,Sb)O_3$, insbesondere Natrium- und Kalium-Niobat, und Hämatit.

3. Verfahren nach einem der vorhergehenden Ansprüche, wobei man eine Richtung bestimmt, dann die Form der ausrichtbaren Partikel entsprechend der Ausrichtung der Funktion auswählt, so dass das gerichtete Einfrieren es erlaubt, Eigenschaften zu erhalten, dessen Intensität je nach besagter Richtung variabel ist.

4. Verfahren nach einem der vorhergehenden Ansprüche, wobei die Gesamtheit von keramischen Partikeln, in Volumenprozent basierend auf der Gesamtheit von keramischen Partikeln, enthält

- eine erste Partikelfraktion bestehend aus ausrichtbaren, vorzugsweise anisotropen Partikeln aus einem Material mit gerichteter Funktion, die einen Median der Länge $L'_{50}$ aufweist und, in Volumenprozent basierend auf der Gesamtheit von keramischen Partikeln, mehr als 1 % der keramischen Partikel darstellt ; und
- eine zweite Partikelfraktion, die einen Median der Länge $D_{50}$ aufweist, der mindestens zehn-fach geringer als $L'_{50}$ ist und, in Volumenprozent basierend auf der Gesamtheit von keramischen Partikeln, mehr als 5 % der keramischen Partikel darstellt ;

wobei die ersten und zweiten Partikelfraktionen zusammen mehr als 80% der Gesamtheit von keramischen Partikeln in Volumenprozent darstellen.

5. Verfahren nach dem vorhergehenden Anspruch, wobei

- die erste Partikelfraktion mehr als 5% und weniger als 15% des Volumens der keramischen Partikel darstellt, und
- die Partikel der ersten Partikelfraktion aus einem Material mit gerichteter Funktion sind, und
- die ersten und zweiten Partikelfraktionen zusammen mehr als 95% des Volumens der Gesamtheit von keramischen Partikeln darstellen, und
- die Korngrößenverteilung der keramischen Partikel bimodal ist, wobei die zwei Hauptmodi jeweils den ersten und zweiten Partikelfraktionen entsprechen,

wobei das Verfahren einen Schritt des Sinterns g) umfasst.

6. Verfahren nach Anspruch 4, wobei

- die erste Partikelfraktion mehr als 90% des Volumens der keramischen Partikel darstellt, und
- die Partikel der ersten Partikelfraktion aus einem Material mit gerichteter Funktion sind, und
- die ersten und zweiten Partikelfraktionen zusammen mehr als 95% des Volumens der Gesamtheit von keramischen Partikeln darstellen, und
- die Korngrößenverteilung der keramischen Partikel bimodal ist, wobei die zwei Hauptmodi jeweils den ersten und zweiten Partikelfraktionen entsprechen,

wobei das Verfahren vorzugsweise einen Schritt des Sinterns g) umfasst.

7. Verfahren nach einem der vorhergehenden Ansprüche, wobei die gerichtete Funktion einer thermischen, elektrischen, piezoelektrischen oder magnetischen Eigenschaft entspricht.

8. Verfahren nach einem der vorhergehenden Ansprüche, wobei die ausrichtbaren keramischen Partikel Bornitrid-Plättchen sind, wobei jedes Plättchen eine Wärmeleitfähigkeit in der Hauptebene des Plättchens aufweist, die höher als die Wärmeleitfähigkeit nach der Dicke des Plättchens ist.

9. Verfahren nach einem der vorhergehenden Ansprüche, wobei die ausrichtbaren keramischen Partikel anisotrope Partikel oder mehrflächige Partikel mit mehr als zwei Flächen sind.

10. Verfahren nach einem der vorhergehenden Ansprüche 2 bis 9, wobei das Material aus dem die ausrichtbaren keramischen, wenn nicht sogar anisotropen Partikel und/oder die keramischen Partikel der zweiten Partikelfraktion und/oder die Partikel der zu den ausrichtbaren Partikeln oder zu den anisotropen Partikeln komplementären Fraktion bestehen, ausgewählt ist aus der Gruppe gebildet aus Zirkoniumoxid oder Zirkon ($ZrO_2$), teilweise stabilisiertes Zirkoniumoxid, stabilisiertes Zirkoniumoxid, Yttriumoxid ($Y_2O_3$), dotiertes Yttriumoxid, vorzugsweise mit Samariumoxid dotiertes Yttriumoxid, Titanoxid ($TiO_2$), Alumosilikate wie Mullit, Cordierit ($Al_3Mg_2AlSi_5O_{18}$), Aluminiumoxid oder Alumina ($Al_2O_3$), hydratisierte Alumina, und insbesondere Böhmit, Magnesiumoxid (MgO), Talk ($Mg_3Si_4O_{10}(OH)_2$), Nickeloxid (NiO), Eisenoxide (FeO, $Fe_2O_3$, $Fe_3O_4$), Ceroxid, dotiertes Ceroxid, Oxide der Perowskitstruktur, insbesondere Gallate, Verbindungen umfassend Lanthan des Typs $LaAlO_3$ oder $LaGaO_3$ oder $La_{(1-x)}Sr_xMO_3$, mit $0 \le x \le 1$ und M ein Element ausgewählt aus der Gruppe gebildet aus Chrom, Kobalt, Magnesium, Eisen, Gadolinium, Mangan und deren Mischungen ; mit Platin und/oder Palladium und/oder Rhodium und/oder Gold und/oder Silber dotierte Oxide der Perowskitstruktur, beispielsweise $La_{(1-x)}Sr_xM_{(1-y)}M'_yO_3$ mit $0 \le x \le 1$, $0 \le y \le 0,15$, wobei M ein Element ist ausgewählt aus der Gruppe gebildet aus Chrom, Kobalt, Magnesium, Eisen, Gadolinium, Mangan und deren Mischungen, wobei M' ein Element ist ausgewählt aus der Gruppe gebildet aus Platin, Palladium, Rhodium, Gold, Silber und deren Mischungen, Verbindungen umfassend Titan des Typs $La_4Sr_8Ti_{11}Mn_{1-x}Ga_xO_{38}$ mit $0 \le x \le$

1 und $La_4Sr_8Ti_{12-n}Mn_nO_{38}$ mit $0 \leq n \leq 1$, Verbindungen des Typs $BaTiO_3$, $BaZrO_3$, $Pb(Mg_{0,25}Nb_{0,75})O_3$, $Ba(Zn_{0,25}Nb_{0,75})O_3$, $Pb(Zn_{0,25}Nb_{0,75})O_3$, $PbTiO_3$, $CaCu_3Ti_4O_{12}$, Verbindungen der Struktur des Typs bimevox, beispielsweise $Bi_2V_{1-x}Me_xO_z$ mit $0 \leq x \leq 1$, wobei z es erlaubt die Elektoneutralität zu gewährleisten, und Me ein Element ausgewählt aus der Gruppe gebildet aus Magnesium, Aluminium, Silizium, Titan, Kobalt, Nickel, Kupfer, Zink, Mangan, Antimon, Tantal, Niob, Chrom, Molybdän, Wolfram, Uran und deren Mischungen, Verbindungen der Struktur des Typs lamox, beispielsweise $La_2Mo_2O_9$, Verbindungen der Struktur Apatit, beispielsweise $Me'_{10}(XO_4)_6Y'_2$, wobei Me' ein Metallkation ist ausgewählt aus der Gruppe gebildet aus $Ca^{2+}$, aus $Cd^{2+}$, aus $Sr^{2+}$, aus $Ba^{2+}$, aus $Pb^{2+}$, aus $Na^+$, aus $K^+$, aus Kationen der seltenen Erden, vorzugsweise $La^{3+}$ und $Nd^{3+}$, aus $Al^{3+}$, aus $U^{4+}$, aus $Th^{4+}$, $(XO_4)$ eine anionische Gruppe ist, ausgewählt aus $PO_4^{3-}$, $SiO_4^{4-}$, $AsO_4^{3-}$, $MnO_4^-$, $SO_4^{2-}$, $CO_3^{2-}$, $HPO_4^{2-}$, $SiO_4^{4-}$, $GeO_4^{4-}$ und deren Mischungen, und Y' ein Anion ist, ausgewählt aus $F^-$, $Cl^-$, $OH^-$, $Br^-$, $I^-$, $CO_3^{2-}$, $O^{2-}$ und deren Mischungen, Verbindungen des Typs $SrCe_{1-x}M_xO_3$ mit $0 \leq x \leq 1$ und M eine seltene Erde, wobei M vorzugsweise Ytterbium ist, Verbindungen des Typs $BaCe_{1-x}M_xO_3$ mit $0 \leq x \leq 1$ und M eine seltene Erde, beispielsweise die Verbindung $BaCeO_3$, die Verbindungen der Familie $La_xSr_{1-x}ScO_3$ mit $0 \leq x \leq 1$, beispielsweise $La_{0,9}Sr_{0,1}ScO_3$, Zeolithe der Struktur $Na_{x1}Ca_{x2}Mg_{x3}Ba_{x4}K_{x5}Al_{x6}(Si_{x7}O_{x8}) \cdot x9H_2O$, wobei $x1$ bis $x9$ positive ganze Zahlen oder Nullen sind, welche die folgenden Bedingungen einhalten: $x6>0$, $x7>0$, $x8>0$, $x9>0$ und $x1 + x2 + x3 + x4 + x5 > 0$, $KNbO_3$ gegebenenfalls dotiert, vorzugsweise mit Lithium und/oder mit Tantal und/oder mit Barium, $NaNbO_3$ gegebenenfalls dotiert, vorzugsweise mit Lithium und/oder mit Tantal und/oder mit Barium, $(K_{0,5}Na_{0,5})NbO_3$ gegebenenfalls dotiert, vorzugsweise mit Lithium und/oder mit Tantal und/oder mit Barium, Aluminiumnitrid, Bornitrid, Siliziumnitrid, Titannitrid, Titankarbid, Siliziumkarbid, Wolframcarbid, Zirkoniumcarbid, und deren Mischungen.

11. Verfahren nach einem der vorhergehenden Ansprüche, wobei im Schritt c) die Bedingungen des gerichteten Einfrierens angepasst sind um Kristalle der erstarrten flüssigen Phase zu bilden, die in einer Quermittelebene eine Breite von mehr als 5-fach, vorzugsweise mehr als 10-fach, wenn nicht sogar mehr als 20-fach größer als die Dicke des Kristalls der erstarrten flüssigen Phase aufweisen, wobei das besagte Verfahren einen Schritt e') umfasst, vorzugsweise dem Schritt e) nachfolgend, bestehend aus dem Komprimieren des Blocks in einer Richtung, die im Wesentlichen parallel ist zu der Richtung der Dicke der Kristalle der erstarrten flüssigen Phase, um so einen Block zu erhalten der eine relative Dichte von größer als 85% aufweist.

12. Ein gegebenenfalls gesintertes Produkt, hergestellt nach einem Verfahren nach einem der vorhergehenden Ansprüche, wobei das Produkt eine Vielzahl von tubulär kegelförmigen makroskopischen Poren umfasst, die sich im Wesentlichen parallel aneinander entlang einer Längsrichtung erstrecken, wobei jede tubulär kegelförmige Pore durch eine Wand begrenzt ist, die zahlenmäßig mehr als 50% der ausrichtbaren keramischen Körner umfassen, wobei die Wände zwischen besagten tubulären kegelförmigen Poren mehr als 5%, in Volumenprozent, der ausrichtbaren keramischen Körner umfassen und eine gerichtete Funktion aufweisen, wobei die ausrichtbaren keramischen Körner ein oder mehrere bevorzugte Ausrichtungen aufweisen.

13. Produkt nach dem unmittelbar vorhergehenden Anspruch, wobei die Streuung der Ausrichtung der Korngrenzen weniger als 30° ist.

14. Produkt nach einem der Ansprüche 12 und 13, wobei eine tubuläre kegelförmige Pore, wenn sie in einem Querschnitt betrachtet wird, einen abgeflachten Bereich aufweist, und wobei zahlenmäßig mehr als 80% der Körner eines Teils der Wand, der sich zwischen zwei benachbarten abgeflachten Poren erstreckt, flach aufeinander gestapelt sind.

15. Dichtes, gegebenenfalls gesintertes Produkt, welches eine relative Dichte von größer als 85% aufweist, umfassend, in Volumenprozent, mehr als 50% der ausrichtbaren keramischen Körner und umfassend mehr als 5%, in Volumenprozent, der ausrichtbaren keramischen Körner, die eine gerichtete Funktion aufweisen, wobei mehr als 80% der ausrichtbaren keramischen Körner im Wesentlichen zueinander parallel sind, wobei das Produkt nach einem Verfahren nach einem der Ansprüche 1 bis 8 und 11 erhalten ist oder hätte möglicherweise erhalten werden können, wobei die Gesamtheit von keramischen Partikeln mehr als 10%, an Volumen der keramischen Partikel, ausrichtbare keramische Partikel aus einem Material mit gerichteter Funktion umfasst, wobei die ausrichtbaren keramischen Partikel anisotrope Partikel sind, wobei ein anisotroper Partikel einen Verlängerungsfaktor R zwischen seiner Länge L und seiner Dicke W1 mit R = L/W1 von größer als 4 aufweist, wobei das Verfahren des Weiteren einen Schritt e') der Komprimierung aufweist, vorzugsweise dem Schritt e) nachfolgend, bestehend aus dem Komprimieren des besagten Blocks in einer Richtung, die im Wesentlichen parallel ist zu der Richtung der Dicke der Kristalle der erstarrten flüssigen Phase.

16. Vorrichtung, ausgewählt aus einer elektrochemischen keramischen Zelle, einer Brennstoffzelle, und insbesondere einer SOFC Batterie, einer IT-SOFC Batterie, einer PCFC Batterie, einem Element zur Filtration eines flüssigen oder gasförmigen Fluids, einer Mikrostruktur zur Speicherung die zum Speichern einer Substanz in den Makroporen genutzt wird, einem Katalysatorträger, einem Wärmetauscher, einer Wärmeisolierung, einem Fluidverteiler, der es erlaubt, das besagte Fluid zu transportieren, und insbesondere einem Gasverteiler, einem Tröpfchenabscheider oder einem Verrieselungsblcok für eine Lüftungsanlage, einem Akkumulator, und insbesondere einem Elektrolyten eines Akkumulators, einem Superkondensator, einem Feuchtigkeitsabsorber, einer Mikro-Verbrennungskammer, einem Signalwanderer, einem Wegsensor, einer Ultraschallsonde, einem Brennguttträger, einer Sintermuffel, wobei die besagte Vorrichtung ein Produkt nach einem der Ansprüche 12 bis 15 umfasst.

**Claims**

1. Process for manufacturing a product, optionally sintered, said process comprising the following steps:

   a) preparing a slip comprising an ensemble of ceramic particles in suspension in a liquid phase, the ensemble of ceramic particles representing more than 4% and less than 50% of the volume of the slip and comprising, in percentage by volume based on the ensemble of ceramic particles, more than 1% of orientable ceramic particles of a material with oriented function, a material with an oriented function having at least one property, other than mechanical, oriented, that is to say whose intensity is variable depending on the orientation of measurement, in a proportion such that there is at least one direction in which said property is at least 1.1 times higher, than the average value of said property in the other directions, the fraction of the non-orientable ceramic particles having a median length ten times less than the median length of the orientable ceramic particles $L_{50}$ if the ensemble of ceramic particles comprises less than 80%, in percentage by volume, of orientable ceramic particles,
   b) optionally, pouring the slip into a mould and/or removing air bubbles contained in the slip,
   c) oriented freezing of the slip by displacement of a solidification front so as to form a block of frozen slip, the velocity $Vp$ of the solidification front being less than the velocity of encapsulation of the ceramic particles $Vc$ and adjusted so as to form crystals of solidified liquid phase separated by walls with an average thickness "e" greater than or equal to the average thickness of the orientable ceramic particles $W1_{50}$; an orientable particle orienting in a particular way under the effect of the passage of the solidification front;
   d) optionally, removing said block from the mould,
   e) removal of the crystals of solidified liquid phase from said block, optionally removed from the mould, preferably by sublimation, so as to obtain a macroporous preform, also called macroscopic frustoconical tubular pore, having a median cross section having an equivalent diameter greater than 0.15 $\mu$m and less than 450 $\mu$m,
   f) optionally, removal of binder from the macroporous preform obtained at the end of step e),
   g) optionally, sintering the macroporous preform so as to obtain a sintered product, this step g) being obligatory if, in step a), the amount of orientable ceramic particles of a material with oriented function is less than 80%, in percentage by volume based on the ensemble of the ceramic particles;
   h) optionally, machining and/or impregnation of said sintered product;
   the ceramic particles being replaceable, partially or completely, with equivalent amounts of precursors that are transformed into ceramic particles so as to obtain said ensemble of ceramic particles before step c), and/or
   the ceramic particles being replaceable, partially or completely, with equivalent amounts of particles of the same shape of a ceramic precursor that is transformed into ceramic in step f) or g),
   the form of the orientable particles being determined so that the orientation of the orientable particles under the effect of the freezing in step c) results, in the macroporous preform, in an intensity of said function which is variable in the direction under consideration.

2. Process according to the preceding claim, wherein the material with oriented function is selected from the group formed by hexagonal boron nitride, graphite, graphene, PMN PT, or $(1-x)[Pb(Mg_{1/3}Nb_{2/3})O_3]$-$x[PbTiO_3]$, with x between 0 and 1, $PbTiO_3$, $(Li,Na,K)(Nb,Ta,Sb)O_3$, in particular potassium sodium niobiate, and haematite.

3. Process according to either one of the preceding claims, wherein a direction is determined and then the form of the orientable particles is selected in relation to the orientation of the function, so that the oriented freezing makes it possible to obtain properties whose intensity is variable in said direction.

4. Process according to any one of the preceding claims, wherein the ensemble of ceramic particles comprises, in percentage by volume based on the ensemble of the ceramic particles,

   - a first particulate fraction consisting of orientable, preferably anisotropic, particles, of a material with oriented function, having a median length $L'_{50}$ and representing more than 1% of the ceramic particles, in percentage by volume based on the ensemble of ceramic particles; and
- a second particulate fraction having a median length $D_{50}$ at least ten times less than $L'_{50}$ and representing more than 5% of the ceramic particles, in percentage by volume based on the ensemble of ceramic particles;

the first and second particulate fractions together representing more than 80% of the ensemble of ceramic particles, in percentage by volume.

5.  Process according to the preceding claim, wherein

    - the first particulate fraction represents more than 5% and less than 15% of the volume of the ceramic particles, and
    - the particles of the first particulate fraction are of a material with oriented function, and
    - the first and second particulate fractions together represent more than 95% of the volume of the ensemble of the ceramic particles, and
    - the granulometric distribution of the ceramic particles is bimodal, the two principal modes corresponding to the first and second particulate fractions, respectively,

    the process comprising a sintering step g).

6.  Process according to Claim 4, wherein

    - the first particulate fraction represents more than 90% of the volume of the ceramic particles, and
    - the particles of the first particulate fraction are of a material with oriented function, and
    - the first and second particulate fractions together represent more than 95% of the volume of the ensemble of ceramic particles, and
    - the granulometric distribution of the ceramic particles is bimodal, the two principal modes corresponding to the first and second particulate fractions, respectively,

    the process preferably comprising a sintering step g).

7.  Process according to any one of the preceding claims, wherein the oriented function corresponds to a thermal, electrical, piezoelectric or magnetic property.

8.  Process according to any one of the preceding claims, wherein the orientable ceramic particles are boron nitride platelets, each platelet having a thermal conductivity in the main plane of the platelet which is greater than the thermal conductivity in the thickness of the platelet.

9.  Process according to any one of the preceding claims, wherein the orientable ceramic particles are anisotropic particles or multifaceted particles having more than two facets.

10. Process according to any one of Claims 2 to 9, wherein the material constituting the orientable, or even anisotropic ceramic particles, and/or the ceramic particles of the second particulate fraction and/or the particles of the fraction complementary to the orientable particles or to the anisotropic particles is selected from the group comprising zirconium oxide or zirconia ($ZrO_2$), partially stabilized zirconium oxide, stabilized zirconium oxide, yttrium oxide ($Y_2O_3$), doped yttrium oxide, preferably yttrium oxide doped with samarium oxide, titanium dioxide ($TiO_2$), the aluminosilicates such as mullite, cordierite ($Al_3Mg_2AlSi_5O_{18}$), aluminium oxide or alumina ($Al_2O_3$), the hydrated aluminas, and in particular boehmite, magnesium oxide (MgO), talc ($Mg_3Si_4O_{10}(OH)_2$), nickel oxide (NiO), the iron oxides (FeO, $Fe_2O_3$, $Fe_3O_4$), cerium oxide, doped cerium oxide, the oxides with perovskite structure, in particular the gallates, compounds comprising lanthanum of the type $LaAlO_3$ or $LaGaO_3$ or $La_{(1-x)}Sr_xMO_3$, with $0 \leq x \leq 1$ and M an element selected from the group comprising chromium, cobalt, magnesium, iron, gadolinium, manganese and mixtures thereof; the oxides with perovskite structure doped with platinum and/or palladium and/or rhodium and/or gold and/or silver, for example $La_{(1-x)}Sr_xM_{(1-y)}M'_yO_3$ with $0 \leq x \leq 1$, $0 \leq y \leq 0.15$, M being an element selected from the group comprising chromium, cobalt, magnesium, iron, gadolinium, manganese and mixtures thereof, M' being an element selected from the group comprising platinum, palladium, rhodium, gold, silver and mixtures thereof, the compounds comprising titanium of the type $La_4Sr_8Ti_{11}Mn_{1-x}Ga_xO_{38}$ with $0 \leq x \leq 1$ and $La_4Sr_8Ti_{12-n}Mn_nO_{38}$ with $0 \leq n \leq 1$, the compounds of the type $BaTiO_3$, $BaZrO_3$, $Pb(Mg_{0.25}Nb_{0.75})O_3$, $Ba(Zn_{0.25}Nb_{0.75})O_3$, $Pb(Zn_{0.25}Nb_{0.75})O_3$, $PbTiO_3$, $CaCu_3Ti_4O_{12}$, the compounds with a structure of the bimevox type, for example $Bi_2V_{1-x}Me_xO_z$ with $0 \leq x \leq 1$, z such as to ensure electroneutrality, and Me an element selected from the group comprising magnesium, alu-

**EP 2 928 842 B1**

minium, silicon, titanium, cobalt, nickel, copper, zinc, manganese, antimony, tantalum, niobium, chromium, molybdenum, tungsten, uranium and mixtures thereof, the compounds with a structure of the lamox type, for example $La_2Mo_2O_9$, the compounds with the apatite structure, for example $Me'_{10}(XO_4)_6Y'_2$ in which Me' is a metal cation selected from the group comprising $Ca^{2+}$, $Cd^{2+}$, $Sr^{2+}$, $Ba^{2+}$, $Pb^{2+}$, $Na^+$, $K^+$, cations of rare earths, preferably $La^{3+}$ and $Nd^{3+}$, $Al^{3+}$, $U^{4+}$, $Th^{4+}$, $(XO_4)$ is an anionic group selected from $PO_4^{3-}$, $SiO_4^{4-}$, $AsO_4^{3-}$, $MnO_4^-$, $SO_4^{2-}$, $CO_3^{2-}$, $HPO_4^{2-}$, $SiO_4^{4-}$, $GeO_4^{4-}$ and mixtures thereof, and Y' is an anion selected from $F^-$, $Cl^-$, $OH^-$, $Br^-$, $I^-$, $CO_3^{2-}$, $O^{2-}$ and mixtures thereof, the compounds of type $SrCe_{1-x}M_xO_3$ with $0 \leq x \leq 1$ and M a rare earth, M preferably being ytterbium, the compounds of the type $BaCe_{1-x}M_xO_3$, with $0 \leq x \leq 1$ and M a rare earth, for example the compound $BaCeO_3$, the compounds of the family $LaxSr_{1-x}ScO_3$ with $0 \leq x \leq 1$, for example $La_{0.9}Sr_{0.1}ScO_3$, the zeolites of structure $Na_{x1}Ca_{x2}Mg_{x3}Ba_{x4}K_{x5}Al_{x6}(Si_{x7}O_{x8}),x9H_2O$, $x1$ to $x9$ being positive integers or zero fulfilling the following conditions: $x6 > 0$, $x7 > 0$, $x8 > 0$, $x9 > 0$ and $x1 + x2 + x3 + x4 + x5 > 0$, $KNbO_3$ optionally doped preferably with lithium and/or tantalum and/or barium, $NaNbO_3$ optionally doped preferably with lithium and/or tantalum and/or barium, $(K_{0.5}Na_{0.5})NbO_3$ optionally doped preferably with lithium and/or tantalum and/or barium, aluminium nitride, boron nitride, silicon nitride, titanium nitride, titanium carbide, silicon carbide, tungsten carbide, zirconium carbide and mixtures thereof.

11. Process according to any one of the preceding claims, wherein, in step c), the conditions of oriented freezing are adjusted to form crystals of solidified liquid phase, having, in a median transverse plane, a width more than 5 times, preferably more than 10 times, or even more than 20 times greater than the thickness of the crystal of solidified liquid phase, the process further comprising a step e'), preferably successive to step e), consisting in compressing the block along a direction roughly parallel to the direction of the thickness of the crystals of solidified liquid phase, so as to obtain a block having a relative density above 85%.

12. Product, optionally sintered, manufactured according to un process according to anyone of the preceding claims, the product comprising a plurality of macroscopic truncated tubular pores extending roughly parallel to one another in a longitudinal direction, each truncated tubular pore being delimited by a wall comprising more than 50% of orientable ceramic grains, the walls between said truncated tubular pores comprising more than 5%, in percentage by volume, of orientable ceramic grains and having an oriented function, the orientable ceramic grains having one or more preferential orientations.

13. Product according to the immediately preceding claim, wherein the dispersion of the orientation of the grain boundaries is below 30°.

14. Product according to any one of claims 12 and 13, wherein a truncated tubular pore has, when observed in a cross-section, a flattened section, and more than 80% by number of the grains of a portion of wall extending between two flattened adjacent pores are stacked flat on top of one another.

15. Dense product, optionally sintered, having a relative density above 85%, comprising more than 50% of orientable ceramic grains, and comprising more than 5%, in percentage by volume, of orientable ceramic grains having an oriented function, more than 80% of orientable ceramic grains being roughly parallel to one another, the ensemble of ceramic particles comprising more than 10%, in volume of ceramic particles, of orientable ceramic particles made of a material with oriented function, the orientable ceramic particles being anisotropic particles, an anisotropic particle having an elongation factor R between its length L and its thickness W1, i.e. $R = L/W1$, greater than 4, the process further comprising a step e') of compression, preferably successive to step e), consisting in compressing said block along a direction roughly parallel to the direction of the thickness of the crystals of solidified liquid phase.

16. Device selected from a ceramic electrochemical cell, a fuel cell, and in particular an SOFC cell, an IT-SOFC cell, a PCFC cell, an element for filtration of a liquid or gaseous fluid, a microstructure for storage used for storing a substance in the macropores, a catalyst support, a heat exchanger, a heat insulator, a distributor of fluid allowing said fluid to be transported, and notably a gas distributor, a separator of drops or a trickling unit for an air conditioning system, a battery, and notably an electrolyte of a battery, a supercapacitor, a humidity adsorber, a micro-combustion chamber, a transducer, a movement sensor, an ultrasonography probe, a baking support, a sintering muffle, said device comprising a product according to any one of claims 12 to 15.

Fig. 1

Fig. 2

Fig. 3

Fig. 4          Fig. 5

Fig. 6

Fig. 7

Fig. 8a

Fig. 8b

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

C

105

104

102

90

105

104

# Fig. 30

104

110

120

# Fig. 31

## RÉFÉRENCES CITÉES DANS LA DESCRIPTION

**Documents brevets cités dans la description**

- US 20070249493 A
- FR 2958288 A1
- US 2010200801 A1
- WO 2013106118 A1

**Littérature non-brevet citée dans la description**

- **PH. HUNGER et al.** Platelets self-assemble into porous nacre during freeze casting. *Journal of the Mechanical Behaviour of Biomedical Materials,* 2012, vol. 19, 87-93
- **S-H. LEE et al.** Fabrication of porous PZT-PZN piezoelectric ceramics with high hydrostatic figure of merits using camphene based freeze casting. *Journal of the American Ceramic Society,* 2007, vol. 90 (9
- **PARK et al.** The encapsulation of particles and bubbles by an advancing solidification front. *Journal of Fluid Mechanics,* 2006, vol. 560, 415-436
- **PEPPIN et al.** Solidification of colloidal suspensions. *J. Fluid Mech.,* 2006, vol. 554, 147-166
- **E. MUNCH ; E. SAIZ ; A.P. TOMSIA ; S. DEVILLE.** Architectural Control of Freeze Cast Ceramics Through Additives and Templating. *J. Am. Ceram. Soc.,* 2007, vol. 92 (7), 1534-1539
- **S.W. SOFIE.** Fabrication of Functionally Graded and Aligned Porosity in Thin Ceramic Substrates With the Novel Freeze-Tape Casting Process. *J. Am. Ceram. Soc,* 2007, vol. 90 (7), 2024-2031
- **E. MUNCH ; E. SAIZ ; A.P. TOMSIA ; S. DEVILLE.** Architectural Control of Freeze Cast Ceramics Through Additives and Templating. *J. Am. Ceram. Soc.,* 2007, vol. 92 (7), 1534-1539
- **MAIRE et al.** Characterization of the morphology of cellular ceramics by 3D image processing of X-ray tomography. *J. Eur. Ceram. Soc.,* 2007, vol. 27 (4), 1973-1981